# EUROPEAN PATENT APPLICATION

(11) **EP 4 733 734 A1**
(43) Date of publication of application: **29.04.2026**
(21) Application number: 25211156.2
(22) Date of filing: 24.10.2025
(51) Int. Cl.: G01M 11/00

(54) **FAST TESTING OF OPTICAL FIBERS IN AN OPTICAL FIBER NETWORK**

(30) Priority: 25.10.2024 US 202463712026 P; 08.07.2025 US 202563840064 P
(71) Applicant: EXFO Inc., Québec, QC G1M 2K2 (CA)
(72) Inventor: DRAPEAU, Alexandre, Québec, G1M 2K2 (CA); L'HEUREUX, Mario, Québec, G1M 2K2 (CA); HARBOUR, Steven, Québec, G1M 2K2 (CA)
(74) Representative: Gregory, Alexandra Louise

(57) **Abstract**

Systems and methods for fast testing of an optical fiber network are provided. A main testing unit and a remote testing unit are optically coupled to opposite extremities of first and second FUT of the network, Each testing unit has a a reflectometric branch with a light source and light detector, and a power meter branch with a power meter but devoid of light sources. Each testing unit also includes a primary switching stage having two unit-side ports optically coupled to the reflectometric branch and power meter branch, respectively, and two network-side ports optically coupled to the first and second FUTs, respectively. In use, optical test signals can be sent from opposite test units into the two FUTs to double the acquisition speed compared to traditional techniques.

## Description

### TECHNICAL FIELD

The technical field generally relates to Optical Time-Domain Reflectometry (OTDR), and more particularly to minimizing test time on testing multifiber optical fiber links.

### BACKGROUND

In the field of optical tests and measurements, customers are looking for a comprehensive testing solution to rapidly characterize fibers in high fiber and ultra-high fiber count contexts, with a particular focus on OLTS and OTDR testing for duplex-fiber and multi-fiber links. The interest for a complete fiber test solution covers a wide range of clients, including those in the outside plant context such as optical cables between data centers, metro networks, fiber to the home, central offices, and 5G antennas as well as hyperscale data centers within the context of inside plant infrastructures.

There is currently no complete solution that adequately meets the main needs of the market. One main issue with existing solutions on the market is the measurement speed. Known solutions typically involves testing each fiber separately, resulting in a measurement time that is at least N times the measurement time of a single fiber, where N is the number of fibers in the link.

There is therefore a need for a solution that reduces the test time for testing multifiber optical fiber links.

### SUMMARY

In accordance with one aspect, there is provided a testing unit for fast testing of an optical fiber network having first and second fibers under test (FUTs), comprising:
- a reflectometric branch, comprising:
   i. at least one light source configured to generate optical test signals for propagation in the first or second FUTs; and
   ii. a light detector configured to detect return light signals received from the first or second FUTs;
characterized in that it further comprises:
- a power meter branch, comprising a power meter configured to measure residual light signals transmitted through the first or second FUTs the reflectometric branch being and devoid of light sources; and
- a switching stage having two unit-side ports optically coupled to the reflectometric branch and power meter branch, respectively, and two network-side ports optically coupled to the first and second FUTs, respectively.

In some implementations, the testing unit further comprises an acquisition controller configured to control the corresponding light source, light detector, power meter and switching stage, the acquisition controller optionally configured to:
- perform reflectometric or optical return loss measurements using the light source and the light detector; and
- perform transmission loss measurements using the power meter.

In some implementations, the testing unit further comprises a processor configured to process data obtained from said reflectometric or optical return loss measurements and transmission loss measurements.

In some implementations, the at least one light source comprises two or more light sources having different spectral characteristics.

In some implementations, the testing unit is configured for use in instances wherein a loopback device connects the first and second FUTs at a distal end thereof opposite the testing unit, thereby defining a single FUT having first and second proximal ends optically coupled to the testing unit, the testing unit configured to:
- in a first step, send the optical test signals from the light source into the first proximal end of the single FUT, and measure the return light signals from the first proximal end of the single FUT using the light detector; and
- in a second step, send the optical test signals from the light source into the second proximal end of the single FUT, and measure the return light signals from the second proximal end of the single FUT using the light detector.

In accordance with one aspect, there is provided a testing system for fast testing of an optical fiber network having first and second fibers under test (FUTs), the testing system characterized in that it comprises a main testing unit and a remote testing unit each according to any one of the variants above, optically coupled to opposite extremities of the first and second FUTs.

In some implementations, the testing system is configured to operate the light sources and the light detectors of the main unit and remote unit for transmitting data bidirectionally over at least one of the first and second FUTs.

In some implementations, the testing system is configured to:
in a first step, concurrently:
   - send the optical test signals from the light source of the main testing unit into the first FUT, and (i) measure the return light signals from the first FUT using the light detector of the main testing unit, and (ii) measure the residual light signals transmitted through the first FUT using the power meter of the remote testing unit; and
   - send the optical test signals from the light source of the remote testing unit into the second FUT, and (i) measure the return light signals from the second FUT using the light detector of the remote testing unit, and (ii) measure the residual light signals transmitted through the second FUT using the power meter of the main testing unit; and
in a second step, concurrently:
   - send the optical test signals from the light source of the main testing unit into the second FUT, and (i) measure the return light signals from the second FUT using the light detector of the main testing unit, and (ii) measure the residual light signals transmitted through the second FUT using the power meter of the remote testing unit; and
   - send the optical test signals from the light source of the remote testing unit into the first FUT, and (i) measure the return light signals from the first FUT using the light detector of the remote testing unit, and (ii) measure the residual light signals transmitted through the first FUT using the power meter of the main testing unit.

In some implementations, the testing system is further configured to perform a preliminary step of, concurrently:
- measure a length of the first FUT using the light source and the light detector of the main testing unit; and
- measure a length of the second FUT using the light source and the light detector of the remote testing unit.

In some implementations, the testing system is configured for use in instances wherein the optical fiber network comprises a first and a second set of N FUTs, characterized in that the main testing unit and the remote testing unit each comprises:
- a first secondary switching stage having a unit-side port optically coupled to one of the network-side ports of the primary switching stage and N network-side ports respectively optically coupled to the N FUTs of the first set of N FUTs, each FUT of the first set of N FUTs thereby defining the first FUT when selected by the first secondary switching stage; and
- a second secondary switching stage having a unit-side port optically coupled to another one of the network-side ports of the primary switching stage and N network-side ports respectively optically coupled to the N FUTs of the second set of N FUTs, each FUT of the second set of N FUT thereby defining the second FUT when selected by the second secondary switching stage.

In some implementations, the testing system is configured to:
in a first series of steps, concurrently:
   - sequentially send the optical test signals from the light source of the main testing unit into each one of the FUTs of the first set of N FUTs, and (i) measure the return light signals from each corresponding FUT of the first set of N FUTs using the light detector of the main testing unit, and (ii) measure the residual light signals transmitted through each corresponding FUT of the first set of N FUTs using the power meter of the remote testing unit; and
   - sequentially send the optical test signals from the light source of the remote testing unit into each one of the FUTs of the second set of N FUTs, and (i) measure the return light signals from each corresponding FUT of the second set of N FUTs using the light detector of the remote testing unit, and (ii) measure the residual light signals transmitted through each corresponding FUT of the second set of N FUTs using the power meter of the main testing unit; and
in a second series of steps, concurrently:
   - send the optical test signals from the light source of the main testing unit into each one of the FUTs of the second set of N FUTs, and (i) measure the return light signals from each corresponding FUT of the second set of N FUTs using the light detector of the main testing unit, and (ii) measure the residual light signals transmitted through each corresponding FUT of the second set of N FUTs using the power meter of the remote testing unit; and
   - send the optical test signals from the light source of the remote testing unit into each one of the FUTs of the first set of N FUTs, and (i) measure the return light signals from each corresponding FUT of the first set of N FUTs using the detector of the remote testing unit, and (ii) measure the residual light signals transmitted through each corresponding FUT of the first set of N FUTs using the power meter of the main testing unit.

In accordance with another aspect, there is provided a fast testing method for an optical fiber network having a first and a second set of N fibers under test (FUTs) using a testing system as above optically coupled to opposite extremities of the first and second sets of N FUTs, the method characterized in that it comprises:
in a first series of steps, concurrently:
   - sequentially send the optical test signals from the light source of the main testing unit into each one of the FUTs of the first set of N FUTs, and (i) measure the return light signals from each corresponding FUT of the first set of N FUTs using the light detector of the main testing unit, and (ii) measure the residual light signals transmitted through each corresponding FUT of the first set of N FUTs using the power meter of the remote testing unit; and
   - sequentially send the optical test signals from the light source of the remote testing unit into each one of the FUTs of the second set of N FUTs, and (i) measure the return light signals from each corresponding FUT of the second set of N FUTs using the light detector of the remote testing unit, and (ii) measure the residual light signals transmitted through each corresponding FUT of the second set of N FUTs using the power meter of the main testing unit; and
in a second series of steps, concurrently:
   - send the optical test signals from the light source of the main testing unit into each one of the FUTs of the second set of N FUTs, and (i) measure the return light signals from each corresponding FUT of the second set of N FUTs using the light detector of the main testing unit, and (ii) measure the residual light signals transmitted through each corresponding FUT of the second set of N FUTs using the power meter of the remote testing unit; and
   - send the optical test signals from the light source of the remote testing unit into each one of the FUTs of the first set of N FUTs, and (i) measure the return light signals from each corresponding FUT of the first set of N FUTs using the detector of the remote testing unit, and (ii) measure the residual light signals transmitted through each corresponding FUT of the first set of N FUTs using the power meter of the main testing unit.

In some implementations, the fast testing method further comprises operating the light sources and the light detectors of the main unit and remote unit for transmitting data bidirectionally over at least one of the FUTs of the first and second sets of N FUTs.

In some implementations, the fast testing method comprises:
- performing Insertion Loss (IL) measurements using the residual light signals transmitted through the FUTs of the first and second sets of N FUTs measured by the main testing unit and remote testing unit; and/or
- performing Optical Return Loss (ORL) measurements using the return light signals from the FUTs of the first and second sets of N FUTs measured by the main testing unit and remote testing unit; and/or
- performing Optical Time Domain Reflectometry (OTDR) measurements using the return light signals from the FUTs of the first and second sets of N FUTs measured by the main testing unit and remote testing unit.

In accordance with one aspect, there is provided a testing system for fast testing of an optical fiber network having first and second fibers under test (FUTs), the testing system comprising:
a main testing unit and a remote testing unit optically coupled to opposite extremities of the first and second FUTs, each of the main testing unit and remote testing unit comprising:
- a reflectometric branch, comprising:
   i. at least one light source configured to generate optical test signals for propagation in the first or second FUTs; and
   ii. a light detector configured to detect return light signals received from the first or second FUTs;
- a power meter branch, comprising a power meter configured to measure residual light signals transmitted through the first or second FUTs, the power meter branch being devoid of light sources; and
- a primary switching stage having two unit-side ports optically coupled to the reflectometric branch and power meter branch, respectively, and two network-side ports optically coupled to the first and second FUTs, respectively.

In some implementations, the testing system is configured to:
in a first step, concurrently:
   - send the optical test signals from the light source of the main testing unit into the first FUT, and (i) measure the return light signals from the first FUT using the light detector of the main testing unit, and (ii) measure the residual light signals transmitted through the first FUT using the power meter of the remote testing unit; and
   - send the optical test signals from the light source of the remote testing unit into the second FUT, and (i) measure the return light signals from the second FUT using the light detector of the remote testing unit, and (ii) measure the residual light signals transmitted through the second FUT using the power meter of the main testing unit; and
in a second step, concurrently:
   - send the optical test signals from the light source of the main testing unit into the second FUT, and (i) measure the return light signals from the second FUT using the light detector of the main testing unit, and (ii) measure the residual light signals transmitted through the second FUT using the power meter of the remote testing unit; and
   - send the optical test signals from the light source of the remote testing unit into the first FUT, and (i) measure the return light signals from the first FUT using the light detector of the remote testing unit, and (ii) measure the residual light
   signals transmitted through the first FUT using the power meter of the main testing unit.

In some implementations, the testing system is further configured to perform a preliminary step of, concurrently:
- measure a length of the first FUT using the light source and the light detector of the main testing unit; and
- measure a length of the second FUT using the light source and the light detector of the remote testing unit.

In some implementations, the testing system is further configured to operate the light sources and the light detectors of the main testing unit and remote testing unit for transmitting data bidirectionally over at least one of the first and second FUTs.

In some implementations, the testing system is configured for use in instances wherein the optical fiber network comprises a first and a second set of N FUTs, wherein the main testing unit and the remote testing unit each comprises:
- a first secondary switching stage having a unit-side port optically coupled to one of the network-side ports of the primary switching stage and N network-side ports respectively optically coupled to the N FUTs of the first set of N FUTs, each FUT of the first set of N FUTs thereby defining the first FUT when selected by the first secondary switching stage; and
- a second secondary switching stage having a unit-side port optically coupled to another one of the network-side ports of the primary switching stage and N network-side ports respectively optically coupled to the N FUTs of the second set of N FUTs, each FUT of the second set of N FUT thereby defining the second FUT when selected by the second secondary switching stage.

In some implementations, the testing system is configured to:
in a first series of steps, concurrently:
   - sequentially send the optical test signals from the light source of the main testing unit into each one of the FUTs of the first set of N FUTs, and (i) measure the return light signals from each corresponding FUT of the first set of N FUTs using the light detector of the main testing unit, and (ii) measure the residual light signals transmitted through each corresponding FUT of the first set of N FUTs using the power meter of the remote testing unit; and
   - sequentially send the optical test signals from the light source of the remote testing unit into each one of the FUTs of the second set of N FUTs, and (i) measure the return light signals from each corresponding FUT of the second set of N FUTs using the light detector of the remote testing unit, and (ii) measure the residual light signals transmitted through each corresponding FUT of the second set of N FUTs using the power meter of the main testing unit; and
in a second series of steps, concurrently:
   - send the optical test signals from the light source of the main testing unit into each one of the FUTs of the second set of N FUTs, and (i) measure the return light signals from each corresponding FUT of the second set of N FUTs using the light detector of the main testing unit, and (ii) measure the residual light signals transmitted through each corresponding FUT of the second set of N FUTs using the power meter of the remote testing unit; and
   - send the optical test signals from the light source of the remote testing unit into each one of the FUTs of the first set of N FUTs, and (i) measure the return light signals from each corresponding FUT of the first set of N FUTs using the detector of the remote testing unit, and (ii) measure the residual light signals transmitted through each corresponding FUT of the first set of N FUTs using the power meter of the main testing unit.

In some implementations, each of the main testing unit and the remote testing further comprises an acquisition controller configured to control the corresponding light source, light detector, power meter and primary switching stage.

In some implementations, the acquisition controller of each of the main testing unit and the remote testing is configured to:
- perform reflectometric or optical return loss measurements using the light source and the light detector; and
- perform transmission loss measurements using the power meter.

In some implementations, each of the main testing unit and the remote testing unit comprises a processor configured to process data obtained from said reflectometric or optical return loss measurements and transmission loss measurements.

In accordance with another aspect, there is provided a testing unit for fast testing of an optical fiber network having first and second fibers under test (FUTs), comprising:
- A reflectometric branch, comprising:
   i. at least one light source configured to generate optical test signals for propagation in the first or second FUTs; and
   ii. a light detector configured to detect return light signals received from the first or second FUTs;
- a power meter branch, comprising a power meter configured to measure residual light signals transmitted through the first or second FUTs the reflectometric branch being and devoid of light sources; and
- a switching stage having two unit-side ports optically coupled to the reflectometric branch and power meter branch, respectively, and two network-side ports optically coupled to the first and second FUTs, respectively.

In some implementations, the further comprises an acquisition controller configured to control the corresponding light source, light detector, power meter and switching stage.

In some implementations, the acquisition controller is configured to:
- perform reflectometric or optical return loss measurements using the light source and the light detector; and
- perform transmission loss measurements using the power meter.

In some implementations, the testing unit further comprises a processor configured to process data obtained from said reflectometric or optical return loss measurements and transmission loss measurements.

In some implementations, the at least one light source comprises two or more light sources having different spectral characteristics.

In some implementations, the testing unit is configured for use in instances wherein a loopback device connects the first and second FUTs at a distal end thereof opposite the testing unit, thereby defining a single FUT having first and second proximal ends optically coupled to the testing unit, the testing unit configured to:
- in a first step, send the optical test signals from the light source into the first proximal end of the single FUT, and measure the return light signals from the first proximal end of the single FUT using the light detector; and
- in a second step, send the optical test signals from the light source into the second proximal end of the single FUT, and measure the return light signals from the second proximal end of the single FUT using the light detector.

In accordance with another aspect, there is provided a fast testing method for an optical fiber network having first and second fibers under test (FUTs) using a main testing unit and a remote testing unit optically coupled to opposite extremities of the first and second FUTs, each of the main testing unit and remote testing unit comprising a reflectometric branch and a power meter branch, the reflectometric branch comprising at least one light source configured to generate optical test signals for propagation in the first or second FUTs, and a light detector configured to detect return light signals received from the first or second FUTs, the power meter branch comprising a power meter configured to measure residual light signals transmitted through the first or second FUTs and being devoid of light sources, each of the main testing unit and remote testing unit comprising a primary switching stage having two unit-side ports optically coupled to the reflectometric branch and power meter branch, respectively, and two network-side ports optically coupled to the first and second FUTs, respectively, the method comprising:
in a first step, concurrently:
   - sending the optical test signals from the light source of the main testing unit into the first FUT, and (i) measuring the return light signals from the first FUT using the light detector of the main testing unit, and (ii) measuring the residual light signals transmitted through the first FUT using the power meter of the remote testing unit; and
   - sending the optical test signals from the light source of the remote testing unit into the second FUT, and (i) measuring the return light signals from the second FUT using the light detector of the remote testing unit, and (ii) measuring the residual light signals transmitted through the second FUT using the power meter of the main testing unit; and
in a second step, concurrently:
   - sending the optical test signals from the light source of the main testing unit into the second FUT, and (i) measuring the return light signals from the second FUT using the light detector of the main testing unit, and (ii) measuring the residual light signals transmitted through the second FUT using the power meter of the remote testing unit; and
   - sending the optical test signals from the light source of the remote testing unit into the first FUT, and (i) measuring the return light signals from the first FUT using the light detector of the remote testing unit, and (ii) measuring the residual light signals transmitted through the first FUT using the power meter of the main testing unit.

In some implementations, the fast testing method further comprises performing a preliminary step of, concurrently:
- measuring a length of the first FUT using the light source and the light detector of the main testing unit; and
- measuring a length of the second FUT using the light source and the light detector of the remote testing unit.

In some implementations, the fast testing method further comprises operating the light sources and the light detectors of the main testing unit and remote testing unit for transmitting data bidirectionally over at least one of the first and second FUTs.

In some implementations, the fast testing method further comprises performing Insertion Loss (IL) measurements using the residual light signals transmitted through the first or second FUTs measured by the main testing unit and remote testing unit.

In some implementations, the fast testing method further comprises performing Optical Return Loss (ORL) measurements using the return light signals from the first and second FUTs measured by the main testing unit and remote testing unit.

In some implementations, the fast testing method further comprises performing Optical Time Domain Reflectometry (OTDR) measurements using the return light signals from the first and second FUTs measured by the main testing unit and remote testing unit.

In accordance with yet another aspect, there is provided a fast testing method for an optical fiber network having a first and a second set of N fibers under test (FUTs) using a main testing unit and a remote testing unit optically coupled to opposite extremities of the first and second sets of N FUTs, each of the main testing unit and remote testing unit comprising:
- a reflectometric branch comprising at least one light source configured to generate optical test signals for propagation in the first or second FUTs, and a light detector configured to detect return light signals received from the first or second FUTs;
- A power meter branch comprising a power meter configured to measure residual light signals transmitted through the first or second FUTs and being devoid of light sources;
- a primary switching stage having two unit-side ports optically coupled to the reflectometric branch and power meter branch, respectively, and two network-side ports;
- a first secondary switching stage having a unit-side port optically coupled to one of the network-side ports of the primary switching stage and N network-side ports respectively optically coupled to the N FUTs of the first set of N FUTs; and
- a second secondary switching stage having a unit-side port optically coupled to another one of the network-side ports of the primary switching stage and N network-side ports respectively optically coupled to the N FUTs of the second set of N FUTs;
the method comprising:
in a first series of steps, concurrently:
   - sequentially send the optical test signals from the light source of the main testing unit into each one of the FUTs of the first set of N FUTs, and (i) measure the return light signals from each corresponding FUT of the first set of N FUTs using the light detector of the main testing unit, and (ii) measure the residual light signals transmitted through each corresponding FUT of the first set of N FUTs using the power meter of the remote testing unit; and
   - sequentially send the optical test signals from the light source of the remote testing unit into each one of the FUTs of the second set of N FUTs, and (i) measure the return light signals from each corresponding FUT of the second set of N FUTs using the light detector of the remote testing unit, and (ii) measure the residual light signals transmitted through each corresponding FUT of the second set of N FUTs using the power meter of the main testing unit; and
in a second series of steps, concurrently:
   - send the optical test signals from the light source of the main testing unit into each one of the FUTs of the second set of N FUTs, and (i) measure the return light signals from each corresponding FUT of the second set of N FUTs using the light detector of the main testing unit, and (ii) measure the residual light signals transmitted through each corresponding FUT of the second set of N FUTs using the power meter of the remote testing unit; and
   - send the optical test signals from the light source of the remote testing unit into each one of the FUTs of the first set of N FUTs, and (i) measure the return light signals from each corresponding FUT of the first set of N FUTs using the detector of the remote testing unit, and (ii) measure the residual light signals transmitted through each corresponding FUT of the first set of N FUTs using the power meter of the main testing unit.

In some implementations, the fast testing method further comprises operating the light sources and the light detectors of the main testing unit and remote testing unit for transmitting data bidirectionally over at least one of the FUTs of the first and second sets of N FUTs.

In some implementations, the fast testing method further comprises performing Insertion Loss (IL) measurements using the residual light signals transmitted through the FUTs of the first and second sets of N FUTs measured by the main testing unit and remote testing unit.

In some implementations, the fast testing method further comprises performing Optical Return Loss (ORL) measurements using the return light signals from the FUTs of the first and second sets of N FUTs measured by the main testing unit and remote testing unit.

In some implementations, the fast testing method further comprises performing Optical Time Domain Reflectometry (OTDR) measurements using the return light signals from the FUTs of the first and second sets of N FUTs measured by the main testing unit and remote testing unit.

In accordance with another aspect, there is provided a synchronization method for fast testing of an optical fiber network having first and second fibers under test (FUTs) using a main testing unit and a remote testing unit optically coupled to opposite extremities of the first and second FUTs, each of the main testing unit and remote testing unit comprising a reflectometric branch and an optical detector branch, the reflectometric branch comprising at least one light source and a light detector, the optical detector branch comprising an optical detector, each of the main testing unit and remote testing unit comprising a primary switching stage having two unit-side ports optically coupled to the reflectometric branch and optical detector branch, respectively, and two network-side ports optically coupled to the first and second FUTs, respectively, the method comprising:
a) concurrently performing an OTDR measurement of the first FUT using the reflectometric branch of the main testing unit and performing an OTDR measurement of the second FUT using the reflectometric branch of the remote testing unit;
b) upon completion of the OTDR measurement of the first FUT, monitoring light from the second FUT using the optical detector of the main testing unit;
c) upon completion of the OTDR measurement of the second FUT, monitoring light from the first FUT using the optical detector of the remote testing unit, and sending a remote coordination signal in the second FUT using the light source of the reflectometric branch of the remote testing unit;
d) upon said monitoring of light from the second FUT using the optical detector of the main testing unit detecting the remote coordination signal, sending a main coordination signal in the first FUT using the light source of the reflectometric branch of the main testing unit;
e) upon said monitoring of light from the first FUT using the optical detector of the remote testing unit detecting the main coordination signal, ceasing the sending of the remote coordination signal, coupling the reflectometric branch of the remote testing unit to the first FUT and initiating a data transmission to the main testing unit over the first FUT using the reflectometric branch of the remote testing unit;
f) upon said monitoring of light from the second FUT using the optical detector of the main testing unit ceasing to detect the remote coordination signal, ceasing the sending of the main coordination signal and initiating a data transmission to the remote testing unit over the first FUT using the reflectometric branch of the main testing unit.

In some implementations, the main coordination signal and the remote coordination signal each comprise a bit frame, a modulation pattern, a continuous wave signal and/or a light pulse.

In some implementations, the data transmissions to the main and remote testing units comprise synchronization data.

In some implementations, the the data transmissions to the main and remote testing units comprise test result data from the OTDR measurements of the first and second FUTs.

In some implementations, the synchronization method comprises a subsequent step g) of
- connecting the reflectometric branch of the main testing unit to the second FUT using the primary switching stage of the main testing unit;
- connecting the reflectometric branch of the remote testing unit to the first FUT using the primary switching stage of the remote testing unit;
- concurrently performing an OTDR measurement of the second FUT using the reflectometric branch of the main testing unit and performing an OTDR measurement of the first FUT using the reflectometric branch of the remote testing unit.

In some implementations, the synchronization method comprises:
- performing an OTDR measurement of the first FUT comprises sending optical test signals from the light source of the main testing unit into the first FUT and measuring return light signals from the first FUT using the light detector of the main testing unit and
- performing an OTDR measurement of the second FUT comprises sending optical test signals from the light source of the remote testing unit into the second FUT, and measuring return light signals from the second FUT using the light detector of the remote testing unit.

In accordance with another aspect, there is provided a synchronization method for fast testing of an optical fiber network having a first and a second set of N fibers under test (FUTs), at least one of the optical fibers within the first and second sets of FUTs serving as a communication fiber, the method using a main testing unit and a remote testing unit optically coupled to opposite extremities of the first and second sets of N FUTs, each of the main testing unit and remote testing unit comprising:
- a reflectometric branch comprising at least one light source and a light detector;
- an optical detector branch comprising an optical detector;
- a primary switching stage having two unit-side ports optically coupled to the reflectometric branch and optical detector branch, respectively, and two network-side ports;
- a first secondary switching stage having a unit-side port optically coupled to one of the network-side ports of the primary switching stage and N network-side ports respectively optically coupled to the N FUTs of the first set of N FUTs; and
- a second secondary switching stage having a unit-side port optically coupled to another one of the network-side ports of the primary switching stage and N network-side ports respectively optically coupled to the N FUTs of the second set of N FUTs;
   the method comprising:
   a) concurrently performing an OTDR measurement of one of the FUTs of the second first set of FUTs, defining a first FUT, using the reflectometric branch of the main testing unit and performing an OTDR measurement of one of the FUTs of the second set of FUTs, defining a second FUT, using the reflectometric branch of the remote testing unit;
   b) upon completion of the OTDR measurement of the first FUT, monitoring light from the second FUT using the optical detector of the main testing unit;
   c) upon completion of the OTDR measurement of the second FUT, monitoring light from the first FUT using the optical detector of the remote testing unit, and sending a remote coordination signal in the second FUT using the light source of the reflectometric branch of the remote testing unit;
   d) upon said monitoring of light from the second FUT using the optical detector of the main testing unit detecting the remote coordination signal, sending a main coordination signal in the first FUT using the light source of the reflectometric branch of the main testing unit;
   e) upon said monitoring of light from the first FUT using the optical detector of the remote testing unit detecting the main coordination signal, ceasing the sending of the remote coordination signal, coupling the reflectometric branch of the remote testing unit to the communication fiber and initiating a data transmission to the main testing unit over the communication FIBER using the reflectometric branch of the remote testing unit;
   f) upon said monitoring of light from the second FUT using the optical detector of the main testing unit ceasing to detect the remote coordination signal, ceasing the sending of the main coordination signal, coupling the reflectometric branch of the main testing unit to the communication fiber and initiating a data transmission to the remote testing unit over the communication fiber using the reflectometric branch of the main testing unit.

In some implementations, the main coordination signal and the remote coordination signal each comprise a bit frame, a modulation pattern, a continuous wave signal and/or a light pulse.

In some implementations, the data transmissions to the main and remote testing units comprise synchronization data.

In some implementations, the data transmissions to the main and remote testing units comprise test result data from the OTDR measurements of the first and second FUTs.

In some implementations, the synchronization method comprises a subsequent step g) of
- connecting the reflectometric branch of the main testing unit to the second FUT using the primary switching stage of the main testing unit;
- connecting the reflectometric branch of the remote testing unit to the first FUT using the primary switching stage of the remote testing unit;
- concurrently performing an OTDR measurement of the second FUT using the reflectometric branch of the main testing unit and performing an OTDR measurement of the first FUT using the reflectometric branch of the remote testing unit.

In some implementations, the synchronization method comprises:
- performing an OTDR measurement of the first FUT comprises sending optical test signals from the light source of the main testing unit into the first FUT and measuring return light signals from the first FUT using the light detector of the main testing unit and
- performing an OTDR measurement of the second FUT comprises sending optical test signals from the light source of the remote testing unit into the second FUT, and measuring return light signals from the second FUT using the light detector of the remote testing unit.

Other features and advantages will be better understood upon of reading of detailed embodiments with reference to the appended drawings.

### BRIEF DESCRIPTION OF THE DRAWINGS

FIGs. 1A and 1B show a schematic representation of a testing system according to one embodiment, in two different testing configurations for performing OTDR and OLTS measurements in two optical fibers.
FIG. 2 is a flow chart of a fast testing method according to one example of implementation.
FIG. 3 shows the testing system of FIGs. 1A and 1B in a configuration used for bidirectional communication.
FIG. 4 is a flow chart of a fast testing method according to another example of implementation.
FIGs. 5A and 5B show a schematic representation of a testing system according to one embodiment, in two different testing configurations for performing OTDR and OLTS measurements in multiple optical fibers.
FIG. 6 is a block diagram of a testing unit according to one implementation.
FIG. 7 is a schematic representation of a testing unit for performing OTDR and OLTS measurements in two optical fibers.
FIG. 8 is a schematic representation of a testing unit for performing OTDR and OLTS measurements in multiple optical fibers.
FIGs. 9A and 9B shown a schematic representation of the use of a testing unit in a loopback testing sequence.
FIG. 10 is a timeline of a synchronization method for fast testing of optical fibers according to one variant in which the testing of the first FUT is complete before the testing of the second FUT; FIGs. 10A to 10F show different seps of the synchronization method.
FIG. 11 is a timeline of a synchronization method for fast testing of optical fibers according to one variant in which the testing of the second FUT is complete before the testing of the first FUT.
FIG. 12 is a flow chart of a synchronization method for fast testing of optical fibers according to some implementations.

### DETAILED DESCRIPTION

It is to be understood that the phraseology and terminology employed in the present description is not to be construed as limiting and are for descriptive purposes only.

Furthermore, it is to be understood that the technology can be conducted or practiced in many ways and that it can be implemented in embodiments other than the ones outlined described herein.

Meanings of technical and scientific terms used herein are to be commonly understood as by one of ordinary skill in the art to which the invention belongs, unless otherwise defined.

In the following description, similar features in the drawings have been given similar reference numerals. In order not to unduly encumber the figures, some elements may not be indicated on some figures if they were already mentioned in preceding figures. It should also be understood herein that the elements of the drawings are not necessarily drawn to scale and that the emphasis is instead being placed upon clearly illustrating the elements and structures of the present embodiments.

The terms "a", "an" and "one" are defined herein to mean "at least one", that is, these terms do not exclude a plural number of items, unless stated otherwise. Terms such as "substantially", "generally" and "about", that modify a value, condition or characteristic of a feature of an exemplary embodiment, should be understood to mean that the value, condition or characteristic is defined within tolerances that are acceptable for the proper operation of this exemplary embodiment for its intended application.

Unless stated otherwise, the terms "connected" and "coupled", and derivatives and variants thereof, refer herein to any structural or functional connection or coupling, either direct or indirect, between two or more elements. For example, the connection or coupling between the elements may be mechanical, optical, electrical, logical, or any combination thereof.

In the present description, the terms "light" and "optical", and variants and derivatives thereof, are used to refer to radiation in any appropriate region of the electromagnetic spectrum. The terms "light" and "optical" are therefore not limited to visible light, but can also include, without being limited to, the infrared or ultraviolet regions of the electromagnetic spectrum. Also, the skilled person will appreciate that the definition of the ultraviolet, visible and infrared ranges in terms of spectral ranges, as well as the dividing lines between them, may vary depending on the technical field or the definitions under consideration, and are not meant to limit the scope of applications of the present techniques.

To provide a more concise description, some of the quantitative expressions given herein may be qualified with the term "about". It is understood that whether the term "about" is used explicitly or not, every quantity given herein is meant to refer to an actual given value, and it is also meant to refer to the approximation to such given value that would reasonably be inferred based on the ordinary skill in the art, including approximations due to the experimental and/or measurement conditions for such given value.

In the present description, the term "about" means within an acceptable error range for the particular value as determined by one of ordinary skill in the art, which will depend in part on how the value is measured or determined, i.e. the limitations of the measurement system. It is commonly accepted that a 10% precision measure is acceptable and encompasses the term "about".

In the present description, when a broad range of numerical values is provided, any possible narrower range within the boundaries of the broader range is also contemplated. For example, if a broad range of value of from 0 to 1000 is provided, any narrower range between 0 and 1000 is also contemplated. If a broad range value of from 0 to 1 is mentioned, any narrower range between 0 and 1, i.e. with decimal value, is also contemplated.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagram herein represents conceptual views of illustrative circuitry embodying the principles of the present technology. Similarly, it will be appreciated that any flowchart, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labelled as a "controller", "processor" or "processing unit", may be provided through the use of dedicated hardware as well as hardware capable of executing software in association with appropriate software and according to the methods described herein.

When provided by a processor, the functions may be provided by a single dedicated processor, by a single shared processor, or by a plurality of individual processors, some of which may be shared. In some implementations of the present technology, the processor may be a general purpose processor, such as a central processing unit (CPU) or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules or units which are implied to be software, may be represented herein as any combination of flowchart elements or other elements indicating performance of process steps and/or textual description. Such modules may be executed by hardware that is expressly or implicitly shown, the hardware being adapted to (made to, designed to, or configured to) execute the modules. Moreover, it should be understood that module may include for example, but without being limitative, computer program logic, computer program instructions, software, stack, firmware, hardware circuitry or a combination thereof which provides the required capabilities.

With these fundamentals in place, we will now consider some non-limiting examples to illustrate various implementations of aspects of the present disclosure.

In accordance with some aspects, there is provided a testing system, a testing unit and a method for fast testing of an optical fiber network.

In the context of the present disclosure, the optical network may be understood as any system configured to carry communication optical signals between at least two locations. The optical network may for example be embodied by a long-distance network, a Passive Optical Network (PON), a Local Area Network (LAN), or the like. The optical network includes at least two optical fibers, optically connecting at least two locations, each location being provided with a test unit. In the present description, the terms "main" and "remote" are used to designate the locations and testing units at opposite extremities of optical fibers being tested. By convention, these designations are usually automatically assigned such that the unit that initiated a referencing process will be identified as the main test unit and the other unit will be remote. When testing without reference, in this case, manual assignation of main/remote by the user would be possible. It will however be understood that this convention can be used randomly on any pair of testing units and is not meant to confer any particular distinguishing characteristics between the two testing units being so named.

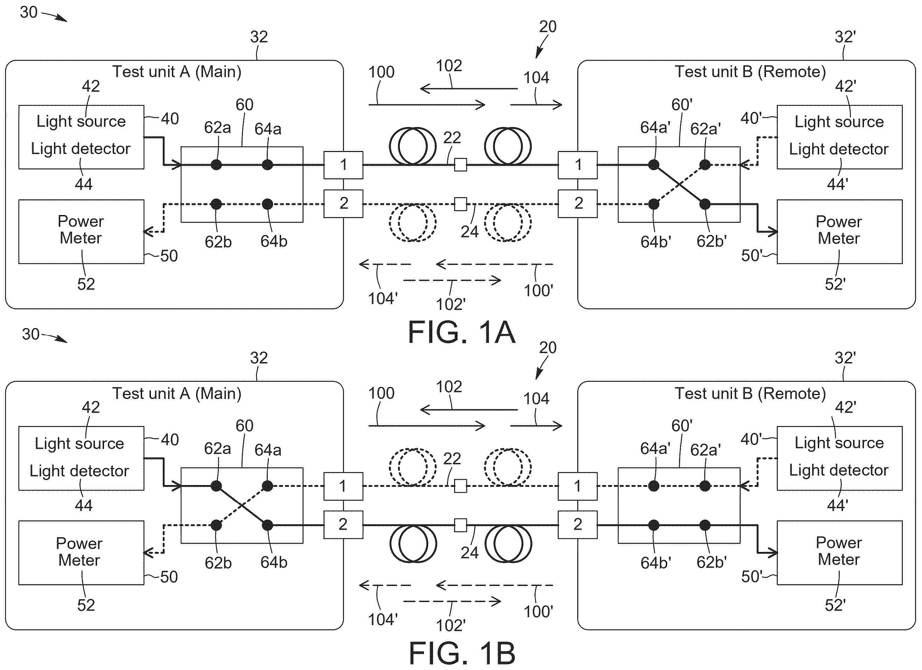

Referring to FIGs. 1A and 1B, there is shown an example of a testing system 30 for fast testing of an optical fiber network 20 having first and second fibers under test (FUTs) 22 and 24. It will be readily understood that the first and second FUTs 22 and 24 may be embodied by any two optical fibers connecting the same two locations in the optical fiber network 20, and that the designation of "first" and "second" in this context are used for ease of reference only and are not meant to impart and preferential characteristics to the FUTs. Any optical fiber of the optical fiber network 20 may be designated as either the first or the second FUT in a given testing process.

The testing system 30 includes a main testing unit 32 and a remote testing unit 32' optically coupled to opposite extremities of the first and second FUTs 22 and 24. Each of the main testing unit 32 and remote testing unit 32' generally includes a reflectometric branch 40, 40' and a power meter branch 50, 50', as described herein below.

The reflectometric branch 40, 40' includes at least one light source 42, 42' configured to generate optical test signals 100, 100' for propagation in the first or second FUTs 22 and 24, and a light detector 44 configured to detect return light signals 102, 102' received from the first or second FUTs 22 and 24.

The power meter branch 50, 50' includes a power meter 52, 52' configured to measure residual light signals 104, 104' transmitted through the first or second FUTs 22 and 24. The power meter or power detector may be embodiment by any device or combination of devices apt to detect light and provide a value relative to the optical power as a function of time. In some implementations, the power meter may for example be embodied by a calibrated sensor and measuring amplifier, or any other equivalent devices. As will be explained further below, the power meter branch is devoid of light sources, that is, the residual light signals 104, 104' are not generated and transmitted through the first and/or second FUTs by a light source which is located in the power meter branch 50, 50'.

Each of the main testing unit 32 and the remote testing unit 32' also includes a primary switching stage 60, 60' linking the reflectometric and power meter branches 40, 40' and 50, 50' to the first and second FUTs 22 and 24. In the illustrated example, the primary switching stage is embodied by a 2x2 optical switch. In other variants, the primary switching stage 60, 60' may be embodied by any component or combination of components performing the switching function described herein. The primary switching stage has two unit-side ports 62a, 62a' and 62b, 62b' optically coupled to the reflectometric branch 40, 40' and power meter branch 50,50', respectively, and two network-side ports 64a, 64a' and 64b, 64b' optically coupled to the first and second FUTs 22 and 24, respectively. It will be readily understood the optical coupling between the primary switching stage 60, 60' and the reflectometric branch 40, 40', power meter branch 50, 50', first FUT 22 and second FUT 24 may be through a direct connection or indirectly through additional optical components, inasmuch as light can propagate therebetween. The primary switching stage 60, 60' can be operated to allow switching between two different configurations:
- FIG. 1A: at the main testing unit 32, the reflectometric branch 40 is optically coupled to the first FUT 22 and the power meter branch 50 is optically coupled to the second FUT 24; at the remote testing unit 32', the reflectometric branch 40' is optically coupled to the second FUT 24 and the power meter branch 50' is optically coupled to the first FUT 22; and
- FIG. 1B: at the main testing unit 32, the reflectometric branch 40 is optically coupled to the second FUT 24 and the power meter branch 50 is optically coupled to the first FUT 22; at the remote testing unit, the reflectometric branch 40' is optically coupled to the first FUT 22 and the power meter branch 50' is optically coupled to the second FUT 24.

In accordance with one aspect, the testing system 30 may be used to perform tests concurrently for each of the first and second FUTs 22 and 24, in opposite directions. Using the primary switching stages 60 of the main and remote test units 40 and 50, the optical test signals 100, 100' propagating in both FUTs 22 and 24 can be dynamically routed to the desired unit-side ports 62a, 62a' and 62b, 62b' and corresponding reflectometric and power meter branches 40, 40' and 50, 50', in order make measurements in each direction without interfering with the instruments of the testing unit at the other end.

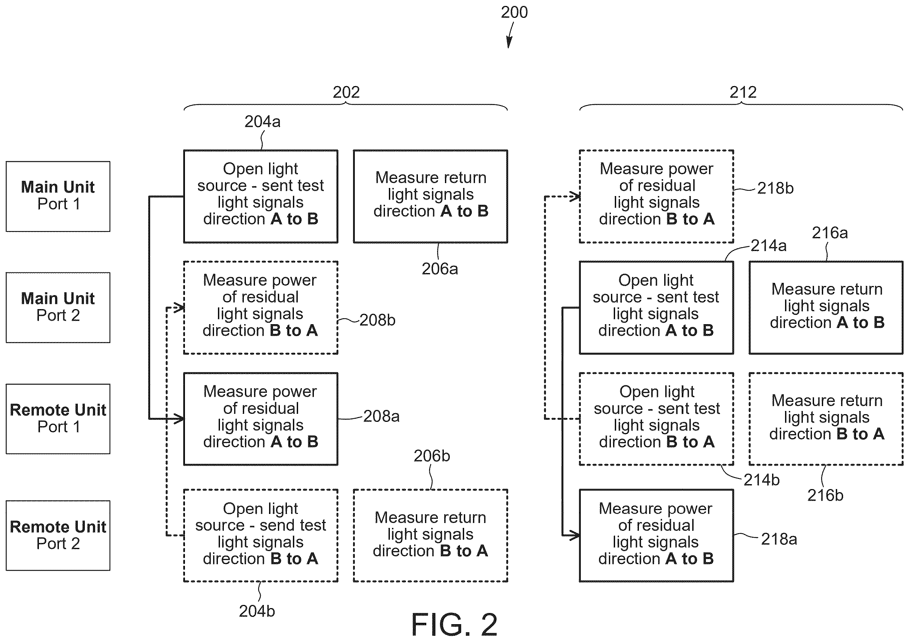

With additional reference to FIG. 2, an example of a fast testing method 200 for an optical fiber network 20 having first and second fibers under test (FUTs) 22 and 24 using a testing system such as described above is schematically illustrated.

In the illustrated variants, the method 200 includes a first step 202, performed with the testing system 20 in the configuration of FIG. 1A, and a second step 212, with the testing system 20 in the configuration of FIG. 1B. The first and second steps 202 and 212 are performed one after the other. As will be understood by one skilled in the art, the designation of "first" and "second" in this context is used for ease of reference only, and that the first and second steps 202 and 212 may be performed in the reverse order to the one provided below without departing from the scope of protection.

In the illustrated embodiment of FIGs. 1A, 1B and 2, the first step 202 includes, concurrently:
- sending 204a the optical test signals 100 from the light source 42 of the main testing unit 32 into the first FUT 22, and (i) measuring 206a the return light signals 102 from the first FUT 22 using the light detector 44 of the main testing unit 32, and (ii) measuring 208a the residual light signals 104 transmitted through the first FUT 22 using the power meter 52' of the remote testing unit 32'; and
- sending 204b the optical test signals 100' from the light source 42' of the remote testing unit 32' into the second FUT 24, and (i) measuring 206b the return light signals 102' from the second FUT 24 using the light detector 44' of the remote testing unit 32', and (ii) measuring 208b the residual light signals 104' transmitted through the second FUT 24 using the power meter 52 of the main testing unit 32.

The second step 212 includes, concurrently:
- sending 214a the optical test signals 100 from the light source 42 of the main testing unit 32 into the second FUT 24, and (i) measuring 216a the return light signals 102 from the second FUT 24 using the light detector 44 of the main testing unit 32, and (ii) measuring 218a the residual light signals 104 transmitted through the second FUT 24 using the power meter 52' of the remote testing unit 32'; and
- sending 216b the optical test signals 100' from the light source 42' of the remote testing unit 32' into the first FUT 22, and (i) measuring 216b the return light signals 102' from the first FUT 22 using the detector 44' of the remote testing unit 32', and (ii) measuring 218b the residual light signals 104' transmitted through the first FUT 22 using the power meter 52 of the main testing unit 32.

In some implementations, the measuring of return light signals from either FUT 22 and 24 using the light detector of either one of the main testing unit and remote testing unit are reflectometric measurements. The reflectometric measurements may be performed according to an OTDR protocol.

OTDR (Optical Time-Domain Reflectometry - the acronym is also used to refer to the corresponding device) is widely employed for characterization of optical fiber links. OTDR is a diagnostic technique where a test signal in the form of light pulses is launched in the optical fiber link under test and the return light signal, arising from backscattering and reflections along the link, is detected and analyzed. The acquired power level of the return light signal as a function of time is referred to as an "OTDR trace" or a "reflectometric trace", where the time scale is representative of distance between the OTDR acquisition device and a point along the fiber link. Herein, the process of launching a test signal and acquiring the return light signal to obtain therefrom an OTDR trace is referred to as an "OTDR acquisition".

In the following description, techniques that are generally known to the ones skilled in the art of OTDR measurement and OTDR trace processing and analysis will not be explained or detailed and in this respect, the reader is referred to available literature in the art. Such techniques that are considered to be known may include, e.g., signal processing methods for identifying and characterizing events from an OTDR trace. Similarly, an OTDR acquisition device is understood to comprise conventional optical hardware and electronics as known in the art for performing OTDR acquisitions on an optical fiber link.

Each OTDR acquisition is understood to refer to the actions of propagating a test signal comprising one or more test light pulses having the same pulse width in the optical fiber link and detecting corresponding return light signal from the optical fiber link as a function of time. A test light-pulse signal travelling along the optical fiber link will return towards its point of origin either through (distributed) backscattering or (localized) reflections. The acquired power level of the return light signal as a function of time is referred to as the OTDR trace, where the time scale is representative of distance between the OTDR acquisition device and a point along the optical fiber link. Light acquisitions may be repeated with varied pulse width values to produce a separate OTDR trace for each test pulse width.

One skilled in the art will readily understand that in the context of OTDR methods and systems, each light acquisition generally involves propagating a large number of substantially identical light pulses in the optical fiber link and averaging the results. In this case, the result obtained from averaging will herein be referred to as an OTDR trace. It will also be understood that other factors may need to be controlled during the light acquisitions or from one light acquisition to the next, such as gain settings, pulse power, etc. as is well known to those skilled in the art.

"Backscattering" refers to Rayleigh scattering occurring from the interaction of the travelling light with the optical fiber media all along the fiber link, resulting in a generally sloped background light (in logarithmic units, i.e. dB, on the ordinate) on the OTDR trace, whose intensity disappears at the end of the range of the travelling pulse. "Events" along the fiber will generally result in a more localized drop of the backscattered light on the OTDR trace, which is attributable to a localized loss, and/or in a localized reflection peak. It will be understood that an "event" characterized by the OTDR method described herein may be generated by any perturbation along the fiber link which affects the returning light. Typically, an event may be generated by an optical fiber splice along the fiber link, which is characterized by a localized loss with little or no reflection. Mating connectors can also generate events that typically present reflectance, although these may be impossible to detect in some instances. OTDR methods and systems may also provide for the identification of events such as a fiber breakage, characterized by substantial localized loss and, frequently, a concomitant reflection peak, as well as loss resulting from a bend in the fiber. Finally, any other component along the fiber link may also be manifest as an "event" generating localized loss.

OTDR technology can be implemented in different manners and advanced OTDR technology typically involves multi-pulse acquisitions and analysis whereby the OTDR acquisition device makes use of multiple acquisitions performed with different pulse widths in order to provide different spatial resolutions and noise level conditions for event detection and measurement along the optical fiber link under test and provide a complete mapping of the optical fiber link. As such, an OTDR measurement may comprise multiple OTDR acquisitions performed with different pulse widths or other varying conditions. One or more OTDR traces acquired for a given OTDR measurement may be saved as part of an OTDR measurement data file or files.

In other implementations, measuring of return light signals from either FUT 22 and 24 using the light detector of either one of the main testing unit and remote testing unit are Optical Return Loss (ORL) measurements. While OTDR measures the distributed reflectance of light along a given FUT, ORL is typically used in the art to refer to the total of all reflectance events and total fiber backscatter over the entire length of fiber being tested. ORL measurements therefore generally consist in a signal reflectance value, expressed in DB.

In some implementations, the measuring of residual light signals from either FUT 22 and 24 using the light detector of either one of the main testing unit and remote testing unit are Insertion Loss (IL) measurements. IL is typically used to determine the total loss in a FUT. The test is performed by launching a test light signal at one end of the FUT and measuring the optical power of the residual light signal at the other end of the FUT, that is the optical power of the test light signals having travelled along the entire length of the FUT without being lost.

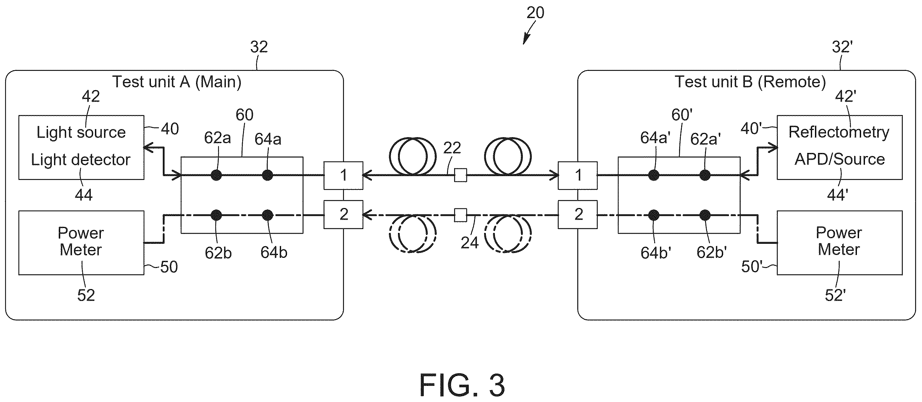

Referring to FIG. 3, in some implementations the testing system 20 is configured to operate the light sources 42, 42' and the light detectors 44, 44' of the main testing unit 32 and remote testing unit 32' for transmitting data bidirectionally over at least one of the first and second FUTs 22 and 24. In the illustrated example, data exchange is performed over the first FUT 22 only, using the components of the reflectometric branches 40, 40' of both the main and remote test units 32 and 32'. Hence, the light generated by the light source 42 of the main test unit 32 can be encoded with data and transmitted over the first FUT 22, and the corresponding signal detected by the light detector 44' of the remote test unit 32' can be decoded, using techniques well known in the art. Conversely, light generated by the light source 42' of the remote test unit 32' can be encoded with data and transmitted over the first FUT 22, and the corresponding signal detected by the light detector 44 of the main testing unit 32 can be decoded. It will be readily understood that either one of the first and second FUTs 22 and 24 may be selected as the communication channel for data exchange. In other variants, both FUTs main be used for data exchange, for example using one FUT for communication in one direction and the other FUT for communication in the other direction.

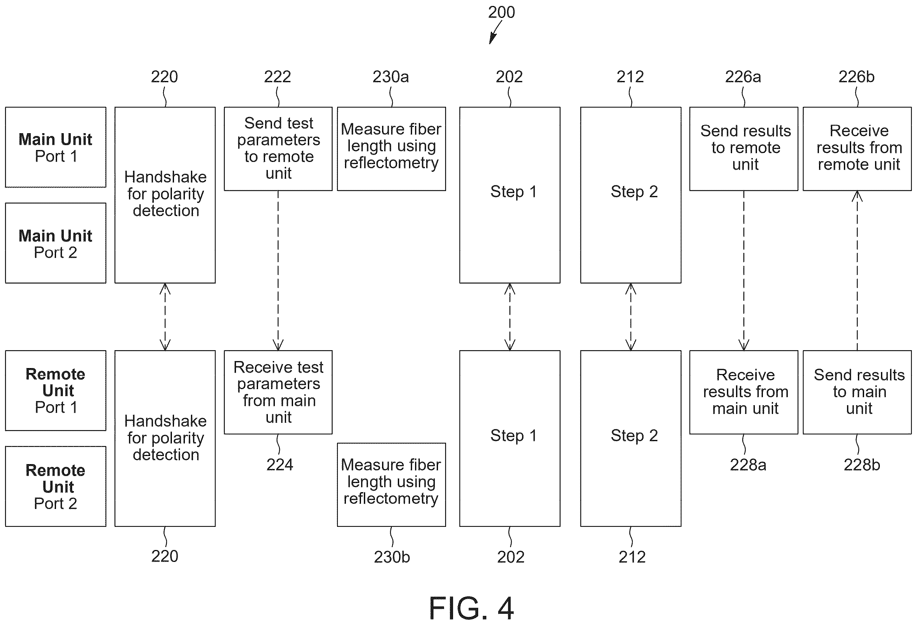

As will be readily understood by one skilled in the art the method 200 may involve performing any additional steps prior or subsequent to the first and second step 202 and 212 described above. Referring to FIG. 4, By way of example, the method 200 may be initiated through a handshake step 220 between the main testing unit 32 and remote testing unit 32' for polarity detection. The handshake step 220 can allow detection of the units connected to the same optical FUTs in order to be able to orchestrate the measurements performed in the first and second steps 202 and 212. The handshake step 220 may be entirely automated without user intervention; for example, when the application is launched the units may be constantly looking for continuity. In another variant, as an option to save battery life, automatic continuity could be deactivated and carried out only when the measurement is started. The continuity detection may be accompanied by visual and/or audible and/or haptic feedback in order to indicate to users that the units are well connected on the same optical link. In addition, indicators such as LEDs located near the main and remote testing units, icons displayed on the screen of the testing units, audio tones as well as haptic vibrations in the units housing may be provided. Optionally, one or both of the first and second FUTs may be used as a communication channel, for example to send test parameters from one of the testing units to the other, using the reflectometric branches of both testing units as explained above. In the illustrated example of FIG. 4, the steps of sending 222 test parameters from the main test unit and receiving 224 the test parameters at the remote testing unit is illustrated.

Still referring to FIG. 4, in some implementations the method 200 may include a preliminary step of measuring 230 the length of the first and second FUTs 22 and 24. This variant may be of particular interest in applications combining ORL and OTDS measurements. The reflectometric branches of the main and remote testing units maybe be used in parallel to send test signals in the first and second FUT, respectively, and analyze return light using OTDR techniques known in the art. The testing system 30 may be configured as shown in either FIG. 1A or 1B for this process. For example, referring to both FIGs. 4 and 1A, the method 200 may involve measuring 230a the length of the first FUT 22 using the light source 42 and the light detector 44 of the main testing unit 32, and, in parallel, measuring 230b the length of the second FUT 24 using the light 42' source and the light detector 44' of the remote testing unit 32'. As will be readily understood by those skilled in the art, in some implementations the length of the first and/or second FUTs may already be known or may already be part of the OTDR measurements, in which cases the length measuring step may be omitted without departing from the scope of protection.

The first step 202 and second step 212 of the method 200 are performed, for example as illustrated in FIG. 2. Finally, the results are exchanged between the two testing units, optionally using one of the first and second FUTs as explained above. In the illustrated example of FIG. 4, the method 200 includes steps of sending 226a the results acquired by the main testing unit through one of the first and second FUTs and receiving 228a these results at the remote testing unit, and then sending 226b the results acquired by the remote testing unit through one of the FUTs and receiving 228b these results at the main testing unit.

Advantageously, embodiments of the method described above allow the measurement sequence to be performed in two steps instead of four. For a bidirectional duplex-fiber measurement, a total of four measurements would be taken. With conventional testing units and methodology, each measurement would be done one at a time to avoid interfering with the testing unit at the other end. Using the method and testing system described herein, the measurement time is divided by two compared to prior art since simultaneous measurements can be carried out simultaneously.

In some implementations, the present method may be entirely automated without the user needing to interact with the equipment or software. By way of example, the user can start the test manually by pressing a button in the user interface, or the application could start the test automatically following the detection of continuity between the two testing units connected on the same fibers. The test can be started from either side, that is, it could be initiated from either the main testing unit or the remote testing unit. Advantageously, in embodiments using two ways communication between the testing units of one or more of the FUT, Following the start of the test the main testing unit may synchronize the various measurement parameters as well as the test configurations and information such as the serial number of the remote testing unit.

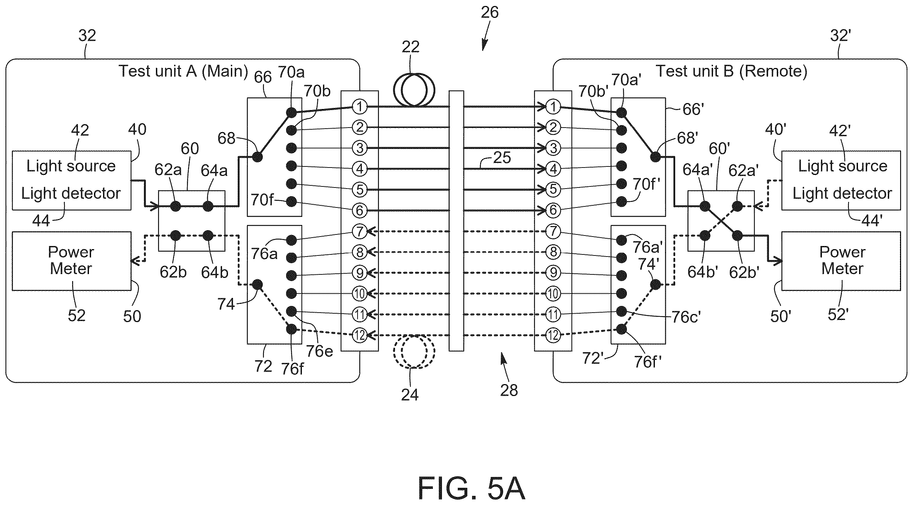

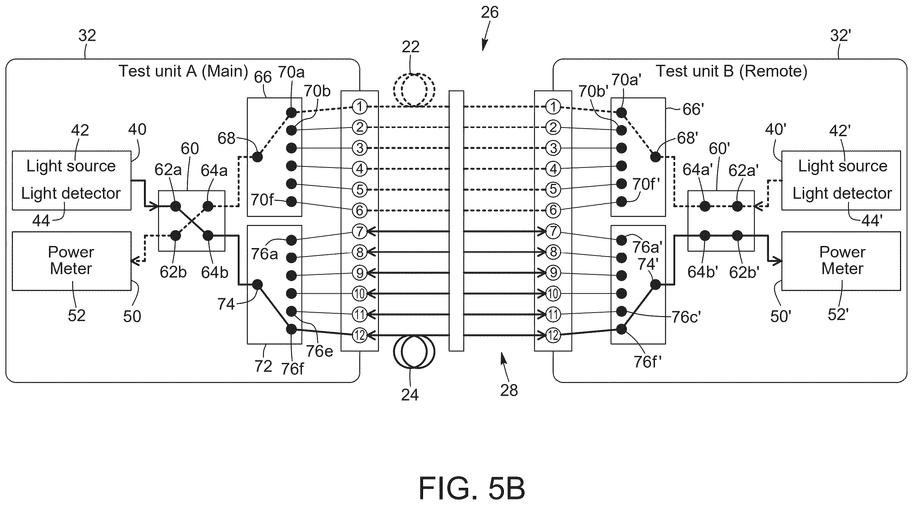

As will be readily understood by one skilled in the art, the method described above can easily be extended to multi-fiber links. Referring to FIGs. 5A and 5B, there is shown an embodiment of a testing system 30 configured for use in instances wherein the optical fiber network 20 comprises a first and a second set of N FUTs 26 and 28. In some embodiments, each of the main testing unit 32 and remote testing unit 32' includes a first secondary switching stage 66,66' having a unit-side port 68, 68' optically coupled to one of the network-side ports 64a,64a' or 64b, 64b' of the primary switching stage 60, 60' and N network-side ports 70a, 70b, ..., 70n or 70a', 70b', ..., 70n' respectively optically coupled to the N FUTs of the first set of N FUTs 26. Each FUT of the first set of N FUTs 26 thereby defines the first FUT 22 when selected by the first secondary switching stage 66, 66'. Each of the main testing unit 32 and remote testing unit 32' further includes a second secondary switching stage 72, 72' having a unit-side port 74, 74' optically coupled to another one of the network-side ports 64a,64a' or 64b, 64b' of the primary switching stage 60, 60' and N network-side ports 76a, 76b,...,76n or 76a', 76b',...,76n' respectively optically coupled to the N FUTs of the second set of N FUTs 28. Each FUT of the second set of N FUT 28 thereby defines the second FUT 24 when selected by the second secondary switching stage 72, 72'.

In some implementations, the first and second steps described above with reference to FIG. 2 may be performed as first and second series of steps performed sequentially for each of the first and second set of N FUTs 26 and 28. FIG. 5A shows an example of configuration of the first series of steps, which involves, concurrently:
- sequentially sending the optical test signals from the light source 42 of the main testing unit 32 into each one of the FUTs 22 of the first set of N FUTs 26, and (i) measure the reflectometric light signals from each corresponding FUT 22 using the light detector 44 of the main testing unit 32, and (ii) measure the residual light signals transmitted through each corresponding FUT 22 using the power meter 52' of the remote testing unit 32'; and
- sequentially send the optical test signals from the light source 42' of the remote testing unit 32' into each one of the FUTs 24 of the second set of N FUTs 28, and (i) measure the reflectometric light signals from each corresponding FUT 24 using the light detector 44' of the remote testing unit 32', and (ii) measure the residual light signals transmitted through each corresponding FUT 24 using the power meter 52 of the main testing unit 32.

FIG. 5B shows an example of configuration of the second series of steps, which involves, concurrently:
- send the optical test signals from the light source 42 of the main testing unit 32 into each one of the FUTs 24 of the second set of N FUTs 28, and (i) measure the reflectometric light signals from each corresponding FUT 24 using the light detector 44 of the main testing unit 32, and (ii) measure the residual light signals transmitted through each corresponding FUT 24 using the power meter 52' of the remote testing unit 32'; and
- send the optical test signals from the light source 44' of the remote testing unit 32' into each one of the FUTs 22 of the first set of N FUTs 26, and (i) measure the reflectometric light signals from each corresponding FUT 22 using the detector 44' of the remote testing unit 32, and (ii) measure the residual light signals transmitted through each corresponding FUT 22 using the power meter 52 of the main testing unit 32'.

In the illustrated embodiment, N=6 hence allowing base-12 fiber testing, but one skilled in the art will readily understand that the design is scalable to any number of fiber links. The secondary switching stages of each unit will share half of the fibers, allowing concurrent measurements of two fibers. Measurements are performed concurrently for the first and second half of the fibers in opposite directions. Using the switching stages both fibers can be dynamically routed in order to measure signals in each direction without interfering with the instrument at the other end. In some implementations, the process may be entirely automated without the user needing to interact with the equipment or software. In such embodiments, from the perspective of the used it appears as if a single measurement is taking place.

In some implementations, there may be provided a testing unit for fast testing of an optical fiber network. The testing unit may be provided as part of a system as described above or separately, for example in replacement of or addition to a similar testing unit of an existing testing system or for solo use in a loopback configuration, as described above. It will be readily understood that the testing unit may be used as either the "main testing unit" or "remote testing, unit", as these designations can be used interchangeably at any location on the optical network.

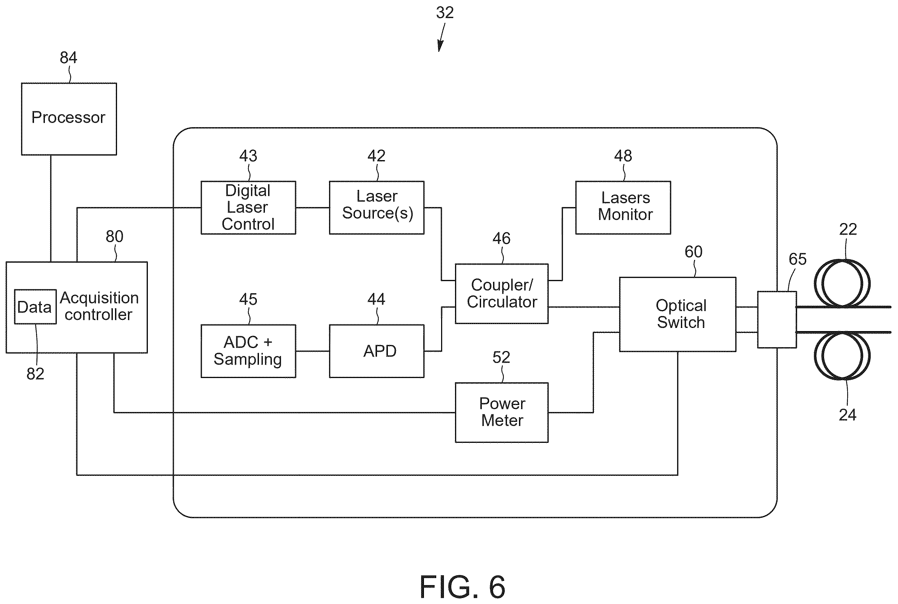

Referring to FIG. 6, a testing unit 32 according to one example of implementation is schematically illustrated.

The testing unit includes a reflectometric branch 40. The reflectometric branch 40 includes at least one light source 42 configured to generate optical test signals. In typical embodiments, the light source is embodied by a laser device and may be driven by a pulse generator 43 to generate test signals comprising test light pulses having desired characteristics. As known in the art, the at least one light source 42 may be adapted to generate test light pulses of varied pulse widths, repetition periods and optical power through a proper control of the pattern produced by the pulse generator 43. One skilled in the art will understand that it may be beneficial or required by an application to perform measurements at various different wavelengths. For this purpose, in some embodiments, the light source 42 may be adapted to generate test light pulses having varied wavelengths by employing a laser source that is tunable, for example. It will be understood that the light source 42 may combine both pulse width and wavelength control capabilities.

The reflectometric branch 40 further includes a light detector 44 configured to detect return light signals. The light detector may for example be embodied by or include a photodiode, an avalanche photodiode or any other suitable photodetector. The light detector 44 detects the return light signal corresponding to each test light pulse and converts the detected return light signals into proportional electrical signals. In some implementations, an analog to digital converter 45 is provided to convert the electrical signals proportional to the detected return light signal from analog to digital in order to allow data storage and processing. It will be understood that the detected return light signal may of course be amplified, filtered or otherwise processed before analog to digital conversion.

In some implementations, the reflectometric branch 40 may further include directional couplers or filtering devices to improve the dynamic range, aggregated in passive optics 46 for simplicity. In the example embodiment of FIG. 6, the first port 47a of 46 is connected to the light source 42 to receive the test light signals therefrom. The second port 47b is optically coupled to the optical fiber network 20, as explained further below. The third port 47c is connected to the light detector 44. Finally, the fourth port 47d is connected to an optional laser monitor 48 for monitoring the light emitted by the at least one laser source 42. The connections are such that test light signals generated by the light source 42 are sent to the optical fiber network 20 and that the return light signals received from the optical fiber network 20 are coupled to the light detector 44.

The testing unit 32 further includes a power meter branch 50, having a power meter 52 configured to measure residual light signals. The power meter is suitable to measure an overall power of light impinging thereon. Notably, the power meter branch 50 is devoid of light sources.

The testing unit 32 further includes a switching stage 60, for example a 2x2 optical switch. The switching stage 60 has two unit-side ports 62a, 62b optically coupled to the reflectometric branch 40 and power meter branch 50, respectively, and two network-side ports 64a, 64b. The two network-side ports may be connected to output/input connectors 65 optically coupled to the first and second FUTs 22 and 24. The switching stage 60 can be controlled to direct light according to two configurations: one configuration in which the reflectometric branch 40 is coupled to the first FUT 22 and the power meter branch is coupled to the second FUT 24, and another configuration in which the reflectometric branch 40 is coupled to the second FUT 24 and the power meter branch is coupled to the first FUT 22.

The testing unit 32 may further include an acquisition controller 80 configured to control the light source 42, light detector 44, power meter 52, switching stage 60 and associated elements. In some implementations, the acquisition controller 80 is configured to perform reflectometric or optical return loss measurements using the light source 42 and the light detector 44, and perform transmission loss measurements using the power meter 52.

In some implementations, the acquisition controller 80 is a hardware logic device. It may comprise one or more Field Programmable Gate Array (FPGA); one or more Application Specific Integrated Circuits (ASICs) or one or more processors, configured with a logic state machine or stored program instructions. When the testing unit 32 is in operation, the acquisition controller 80 is configured to control the measurement process. The acquisition controller 80 may control parameters of the light source 42 according to acquisition parameters that are either provided by the user or by a software application.

The acquisition controller 80 may include or be in communication with a data store 82. The data store 82 may be used to cumulate raw data received from the light detector 44 and/or power meter 52, as well as intermediary averaged results and resulting traces. The data store 82 may include any of volatile memory elements (e.g., random access memory (RAM, such as DRAM, SRAM, SDRAM, and the like)) or the like and it may be embedded with the acquisition controller 80 or be distinct therefrom.

The traces acquired by the light detector 44 may be received and analyzed by one or more of the computer programs and/or stored in the data store 82 for further processing.

In some implementations, the testing unit 32 includes a processor 84 configured to process data obtained from reflectometric or optical return loss measurements and transmission loss measurements.

It will be appreciated that the term "processor" may refer to one or more generic or specialized processors ("one or more processors") such as microprocessors; Central Processing Units (CPUs); Digital Signal Processors (DSPs): customized processors such as Network Processors (NPs) or Network Processing Units (NPUs), Graphics Processing Units (GPUs), or the like; Field Programmable Gate Arrays (FPGAs); and the like along with unique stored program instructions (including both software and firmware) for control thereof to implement, in conjunction with certain non-processor circuits, some, most, or all of the functions of the methods and/or systems described herein. Alternatively, some or all functions may be implemented by a state machine that has no stored program instructions, or in one or more Application Specific Integrated Circuits (ASICs), in which each function or some combinations of certain of the functions are implemented as custom logic or circuitry. Of course, a combination of the aforementioned approaches may be used. For some of the embodiments described herein, a corresponding device in hardware and optionally with software, firmware, and a combination thereof can be referred to as "circuitry configured or adapted to," "logic configured or adapted to," etc. perform a set of operations, steps, methods, processes, algorithms, functions, techniques, etc. on digital and/or analog signals as described herein for the various embodiments.

Moreover, some embodiments may include a non-transitory computer-readable storage medium having computer readable code stored thereon for programming a computer, server, appliance, device, processor, circuit, etc. each of which may include a processor to perform functions as described and claimed herein. Examples of such computer-readable storage mediums include, but are not limited to, a hard disk, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory), Flash memory, and the like. When stored in the non-transitory computer-readable medium, software can include instructions executable by a processor or device (e.g., any type of programmable circuitry or logic) that, in response to such execution, cause a processor or the device to perform a set of operations, steps, methods, processes, algorithms, functions, techniques, etc. as described herein for the various embodiments.

It should be noted that the architecture of the testing unit 32 as shown in FIG. 6 is meant as an illustrative example only. Numerous types of optical and electronic components are available and can be used to implement the testing unit 32. Of course, the testing unit 32 may include different and/or additional components, such as modulators, lenses, mirrors, optical filters, wavelength selectors and the like.

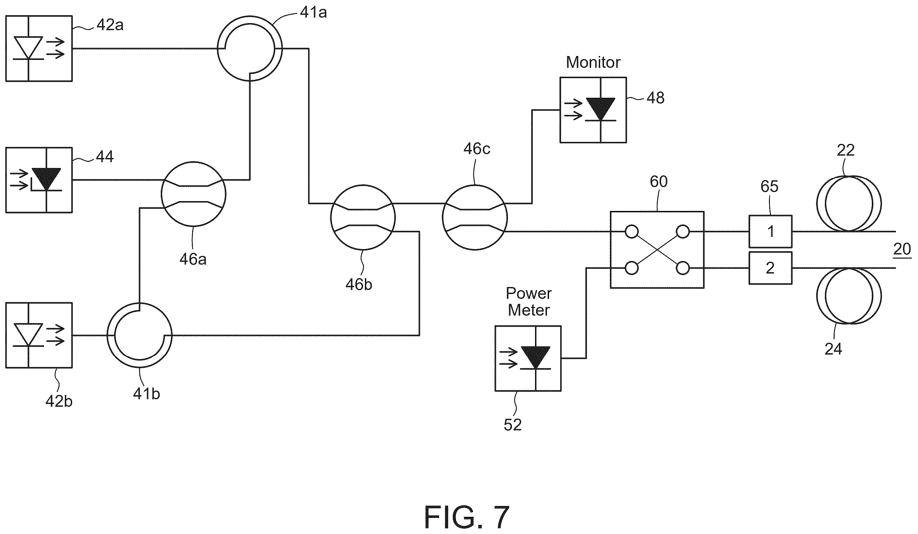

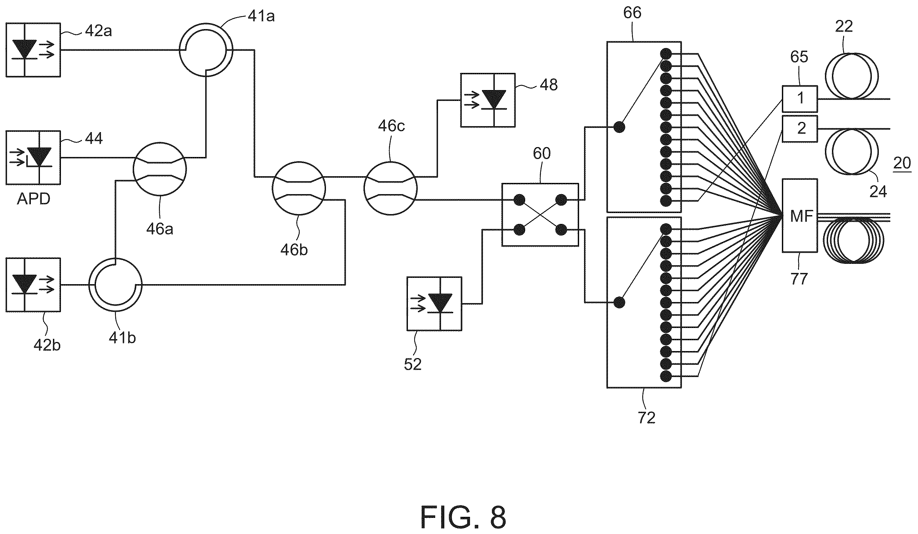

Referring to FIGs. 7 and 8, there are shown more detailed examples of optical schemes that may embody components of the testing unit 32. FIG. 7 is an example of optical component implementation for a native duplex-fiber testing unit, that feature single-fiber and duplex-fiber compatible connectors. FIG. 8 is an example of optical component implementation for a native duplex-fiber and multi-fiber test unit, that feature single-fiber, duplex-fiber and multi-fiber compatible connectors.

In both examples, the testing unit 32 includes two laser light sources 42a and 42b, which can be used for both OLTS and OTDR measurements, and an avalanche photodiode light detector 44 used for reflectometry. The two laser sources 42a, 42b may each provide light at a dedicated wavelength. Optical circulators 41a, 41b distribute the light signals traveling in opposite directions, by directing light from the respective laser light sources 42a, 42b towards the optical network 20, and light from the optical network 20 towards the light detector 44. Optical couplers 46a, 46b, 46c divides the light signal into two outputs/inputs precisely controlled by a split ratio. A tap laser monitor 48, for example a power meter, is connected to one port of optical couple 46b for source power management.

A power meter 52 is provided for performing IL measurements.

The illustrated examples of testing units 32 further includes a 2x2 optical switch 60 to emit/receive the light from the FUTs 22 and 24 in the example of FIG. 7, or the secondary switching stages 66, 72 in the example of FIG. 8.

A duplex-fiber output/input port 65 (2x single-fiber) connector to the first and second FUTs 22 and 24 and allows single-fiber and duplex-fiber testing. By way of example SC, FC, LC, MDC, SN or CS connectors may be used.

In the example of FIG. 8, Two 1xN optical switchs 66 and 72 embody the secondary switching stages and are positioned at on the network-side of the 2x2 switch 60 to emit/receive the light from the FUTs. A multi-fiber output/input port 77 allows testing different fiber count such as Base-8, 12, 16, 24, etc.Examples of multi-fiber output/input port includes MTP/MPO, MMC, or SN-MT connectors.

In some implementations, for more versatility, a duplex-fiber port 65 may be included with multi-fiber models. Indeed, in most cases, multi-fiber optical networks also include combinations of fanout to duplex-fiber, being able to offer both types of connectors in a single test unit would be an advantage. For the secondary switch stages, depending on the needs, the testing unit could accommodate optical switches with more or less fibers. The second switch stage can be N number of fibers depend on the testing unit configuration, connectors and link under test. For example, a testing unit designed to test duplex-fiber and multi-fiber Base-8/12 could be equipped of two 1x7 switches positioned at the output of the 2x2 switch. A testing unit designed to test duplex-fiber and multi-fiber Base-16/32 could be equipped of two 1x17 switches positioned at the output of the 2x2 switch.

In some implementations, the optical and electronic design of the testing unit may allow for different variants of the number of supported fibers to be offered without requiring a redesign of the testing unit. The choice of ultra-fast Micro-Electromechanical Systems (MEMS) switch types may be considered to accommodate switches variants with compatible electronic specifications and dimensions, even if the number of fibers varies. Depending on the need of a particular application for new connectors with an increasing number of fibers.

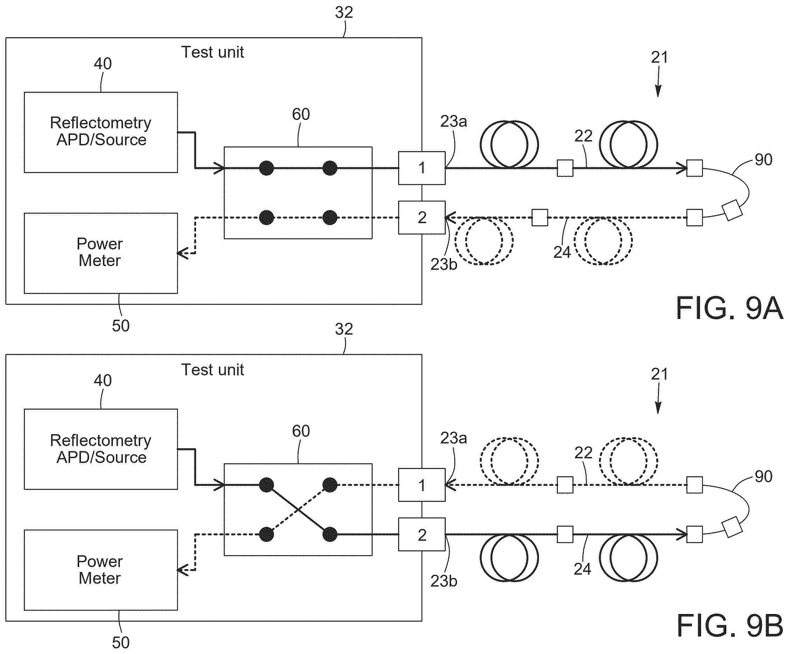

As mentioned above, embodiments of the presently disclosed testing unit 32 may be used as the main testing unit or remote testing unit in a testing system such as illustrated in FIGs. 1A and 1B. Referring to FIGs. 9A and 9B, in another variant, the testing unit 32 may be used in instances wherein a loopback device 90 connects the first and second FUTs 22 and 24 at a distal end 92 thereof opposite the testing unit 32. In this case, the first and second FUTs 22 and 24 form together a same optical path, defining a single FUT 21 having first and second proximal ends 23a and 23b optically coupled to the testing unit 32. In one embodiment, the testing unit 32 may be used, in a first step, to send the optical test signals from the light source 44 into the first proximal end 23a of the single FUT 21 and measure the return light signals from the first proximal end 23a of the single FUT 21 using the light detector. In a second step, the testing unit 32 sends the optical test signals from the light source into the second proximal end 23b of the single FUT 21, and measures the return light signals from the second proximal end 23b of the single FUT 21 using the light detector. The power meter may be used for continuity detection.

An example of an automated loopback test sequence may be performed as follows:
- The user connects the duplex link under test to the testing unit, then connects the loopback device to the other end, respecting its connectors A-B polarity identification.
- The testing unit positions the 2x2 switch 60 to transmit a source signal into the first connector (first proximal end of the FUT) and receive a signal from the second connector (second proximal end of the FUT) using the power meter (see FIG. 9A).
- The testing unit continuously transmits a signal into the first proximal end 23a of the FUT and waits to receive the signal that will be looped into the second proximal end 23b of the FUT.
- Following the reception of the signal from the second proximal end 23b of the FUT, the testing unit 32 may indicate, using any of different indicators known in the art, that continuity is established on the FUT to be tested.
- The testing unit 32 then initiates the first reflectometry measurement, at which point, with the signature of the loopback device 90, the testing unit 32 will be able to determine the polarity of the link.
- The testing unit 32 positions the 2x2 switch 60 to transmit a source signal into the second proximal end 23b of the FUT and receive a signal from the firs proximal end 23a of the FUT using the power meter (see FIG. 9A).
- The testing unit initiates the second reflectometry measurement.
- The reflectometric measurement analysis segments the single FUT 21 into the first and second FUTs 22, 24 constituting the duplex link, while removing contributions from the test cords as well as the loopback device.

This measurement mode divides the measurement time by two compared to the 1 by 1 link test method. With traditional units that have a single connector without an automated toggle mechanism, this method requires two manual measurements. The links under test must be disconnected and reversed between the two measurement points. However, this double disconnection also increases the risk of damaging the connectors. The automated solution "Zero Dead Time" described above solves these problems.

In yet another implementation, there is provided a fast testing method enabling an automated measurement coordination mechanism that optimizes testing time between two test units operating on the same FUTs. This variant may support both unidirectional and bidirectional fiber characterization processes, enabling simultaneous measurements on duplex and multi-fiber links.

This method may be implemented in an optical fiber network 20 such as illustrated in FIGs. 1A and 1B, having first and second fibers FUTs 22, 24, and using a main testing unit 32 and a remote testing unit 32' optically coupled to opposite extremities of the first and second FUTs 22, 24. It will be readily understood that the first and second FUTs 22 and 24 may be embodied by any two optical fibers connecting the same two locations in the optical fiber network 20, and that the designation of "first" and "second" in this context are used for ease of reference only and are not meant to impart and preferential characteristics to the FUTs. Any optical fiber of the optical fiber network 20 may be designated as either the first or the second FUT in a given testing process. Furthermore, the designations of "main" and "remote" testing units are used for ease of reference only, and can be used interchangeably at any location on the optical network. Each of the main testing unit 32 and remote testing unit 32' has a reflectometric branch 40, 40' and an optical detector branch 50, 50'. The reflectometric branch 50, 50' has at least one light source 42, 42' and a light detector 44, 44' and may be embodied by any of the variants described or discussed above or equivalents thereto. The optical detector branch 50, 50' includes an optical detector 52, 52'. In some implementations, the optical detector 52, 52' may be embodied by any detecting device or combination of devices apt to measure light power, as explained above. In other embodiments, the optical detector 52, 52' may be embodied by any device apt to return a signal indicative of a presence of light, such as for example a photodiode. In some implementations, the optical detector branch 50, 50' may be devoid of light sources, as shown in FIG. 1A and 1B, but in other variants the optical detector branch 50,50' may include one or more light sources for any purpose. The main testing unit 32 and remote testing unit 32' each includes a primary switching stage 60, 60' having two unit-side ports 62a, 62b optically coupled to the reflectometric branch 40, 40' and optical detector branch 50, 50', respectively, and two network-side ports 64a, 64b optically coupled to the first and second FUTs 22, 24, respectively.

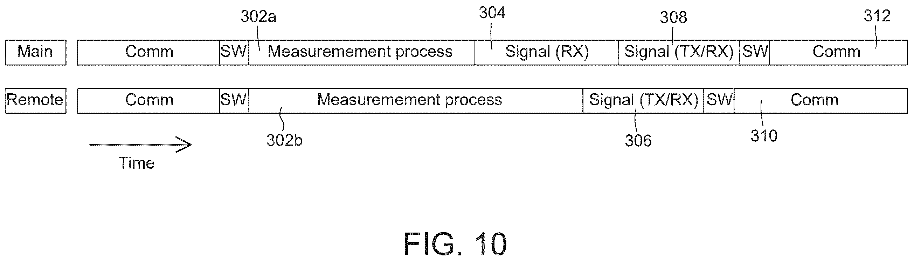

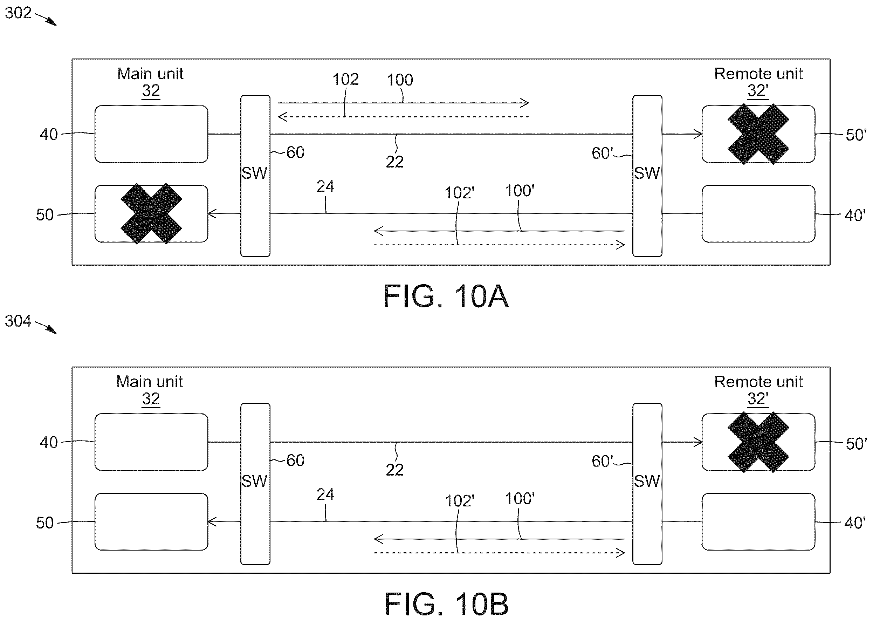

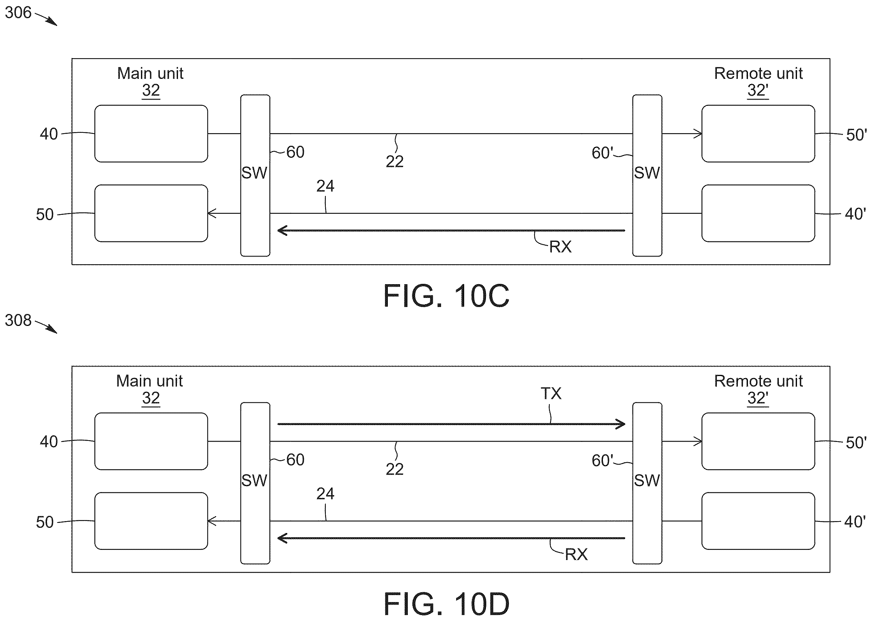

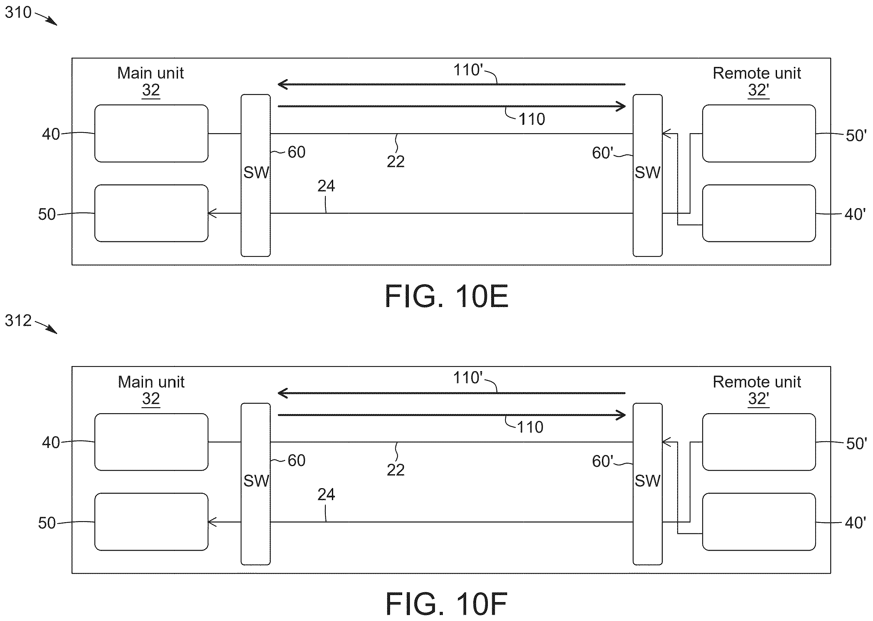

Referring to FIG. 10, an example of the synchronization method 300 according to this implementation is shown. In this example, the testing of the first FUT 24 finishes before the testing of the first FUT 22, but the same method also applies if the testing of the first FUT finishes before the testing of the second FUT, as explained below. In the illustrated example, the first FUT 22 is dedicated to bilateral communication between the main and remote testing units. In other variants, as shown with respect to another example below, a different optical fiber of the optical fiber network may be used for communication purposes.

In context, the method may for example be applied after communication and continuity has been establishes between the main and remote testing unit through the first and second FUTs. Any preliminary steps such as synchronizing test parameters, configuration and test ID may be performed before the measurement process is started.

With additional reference to FIG. 10A, the synchronization method 300 first includes a step 302 of concurrently performing an OTDR measurement of the first FUT 22 (302a) using the reflectometric branch 40 of the main testing unit 32 and performing an OTDR measurement of the second FUT 24 (302b) using the reflectometric branch 40' of the remote testing unit 32'. Both OTDR measurements may be performed according to any of the techniques explained above. For example, the light source of the reflectometric branch 40 of the main testing unit 32 may generate optical test signals 100 which are coupled into the first FUT 22 through the primary switching stage 60 of the main testing unit 32, and return light signals 102 from the first FUT 22 are coupled in the opposite direction to be measured using the light detector of the reflectometric branch 40 of the main testing unit 32. Similarly, the light source of the reflectometric branch 40' of the remote testing unit 32' may generate optical test signals 100' which are coupled into the second FUT 24 through the primary switching stage 60' of the remote testing unit 32', and return light signals 102' from the second FUT 24 are coupled in the opposite direction to be measured using the light detector of the reflectometric branch 40' of the remote testing unit 32'.

Referring to FIGs. 10 and 10B, the synchronization method 300 next includes a step 304 of, upon completion of the OTDR measurement of the first FUT 22, monitoring light from the second FUT 24 using the optical detector of the optical detector branch 50 of the main testing unit 32. This may be performed automatically by the acquisition controller of the main testing unit 32. The OTDR measurements of the second FUT 24 continue unaffected by this change.

Referring to FIGs. 10 and 10C, the synchronization method 300 next includes a step 306 of, upon completion of the OTDR measurement of the second FUT 24, monitoring light from the first FUT 22 using the optical detector of the optical detector branch 50' the remote testing unit 32'. At the same time, a remote coordination signal RX is sent in the second FUT 24 using the light source of the reflectometric branch 40' of the remote testing unit 32'. The remote coordination signal may for example be embodied by a bit frame, a modulation pattern, a continuous wave signal a light pulse, or any other which the optical detector of the optical detector branch 50 of the main testing unit 32 is able to detect.

Referring to FIGs. 10, an 10D, the synchronization method 300 next includes a step 308 of, upon the monitoring of light from the second FUT 24 using the optical detector of the optical detector branch 50 of the main testing unit 32 detecting the remote coordination signal RX, sending a main coordination signal TX in the first FUT 22 using the light source of the reflectometric branch 40 of the main testing unit 32. The main coordination signal may for example be embodied by a bit frame, a modulation pattern, a continuous wave signal a light pulse, or any other signal encoded which the optical detector of the optical detector branch 50' of the remote testing unit 32' is able to detect. The main and remote coordination signals TX, RX may be of a similar nature or different without departing from the scope of protection.

Referring to FIGs. 10 and 10E, the synchronization method 300 next includes a step 310 of, upon the monitoring of light from the first FUT 22 using the optical detector of the remote testing unit 32' detecting the main coordination signal TX, ceasing the sending of the remote coordination signal RX. The reflectometric branch 40' of the remote testing unit 32' is then coupled to the first FUT 22 through the primary switching stage 60' of the remote testing unit 32' and a data transmission to the main testing unit 32 over the first FUT 22 is initiated using the reflectometric branch 40' of the remote testing unit 32' to generate a data signal 110'.

Referring to FIGs. 10 and 10F, the synchronization method 300 next includes a step 312 of, upon the monitoring of light from the first FUT 22 using the optical detector of the optical detector branch 50 of the main testing unit 32 ceasing to detect the remote coordination signal RX, ceasing the sending of the main coordination signal TX and initiating a data transmission to the remote testing unit 32 over the first FUT 22 using the reflectometric branch 40 of the main testing unit 32. In this instance, the reflectometric branch 40 of the main testing unit 32 is already coupled to the first FUT 22, and there is therefore no need to active the primary switching stage 60 of the main testing unit 32. The light source of the reflectometric branch 40 of the main testing unit 32 is used to generate a data signal 110 sent over the first FUT 22.

The data signals 110, 110' may be embodied by any signal encoded with information for communication between the main testing unit and the remote testing unit, and which the light detector of the reflectometric branches 40,40' of the main and remote testing units 32, 32' are able to detect. In some implementations, the data signals 110, 110' may include synchronization data, test parameters such as the test configuration and measurement settings, test result data from the OTDR measurements of the first and second FUTs, and/or any other relevant information.

For bidirectional testing of the first and second FUTs, the method may be repeated with the opposite FUTs connection at both the main and the remote testing units. In some embodiments, the method may then involve connecting the reflectometric branch 40 of the main testing unit 32 to the second FUT 24 using the primary switching stage 60 of the main testing unit 32, and connecting the reflectometric branch 40' of the remote testing unit 32' to the first FUT 22 using the primary switching stage 60' of the remote testing unit 32'. The method above may therefore be adapted to concurrently performing an OTDR measurement of the second FUT 24 using the reflectometric branch 40 of the main testing unit 32 and performing an OTDR measurement of the first FUT 24 using the reflectometric branch 40' of the remote testing unit 32'. The other steps of the method above may be similarly adapted.

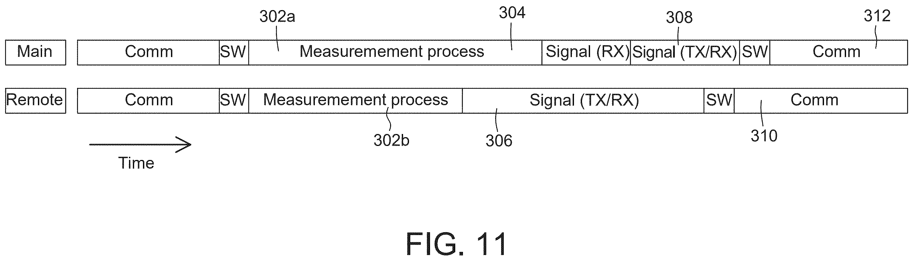

In the example above, the OTDR measurements of the first FUT are completed before the OTDR measurements of the second FUT. It can however be demonstrated that the method above is applicable of regardless the testing of which FUT finishes first. Referring to FIG. 11, an example of a case in which the OTDR measurements of the second FUT 24 are completed before the OTDR measurements of the first FUT is illustrated. The same sequence of steps 302, 304, 306, 308, 310 and 312 explained above are performed. The one difference is that in this case, the step 306 of, upon completion of the OTDR measurement of the second FUT 24, monitoring light from the first FUT 22 using the optical detector of the remote testing unit 32' and sending a remote coordination signal RX in the second FUT 24 using the light source of the reflectometric branch 40' of the remote testing unit 32', occurs earlier in time than the step 304 of upon completion of the OTDR measurement of the first FUT 22, monitoring light from the second FUT 24 using the optical detector of the optical detector branch 50 of the main testing unit 32.

It will be readily understood that the synchronization method 300 above may be used with any pairs of optical fibers of the optical fiber network acting as the first and second FUTs. While FIGs. 10 and 11 illustrate the characterization of two fibers, the same principles apply to multi-fiber measurements involving a larger number of fibers. In some implementations, one of the optical fibers connecting the main testing unit and the remote testing unit may be used to as the communication fiber 25. For example, in a 12 or 24 fiber layout, fiber #4 will is typically preferred for communication purposes, as it is consistently present across the various configurations commonly used in industry.

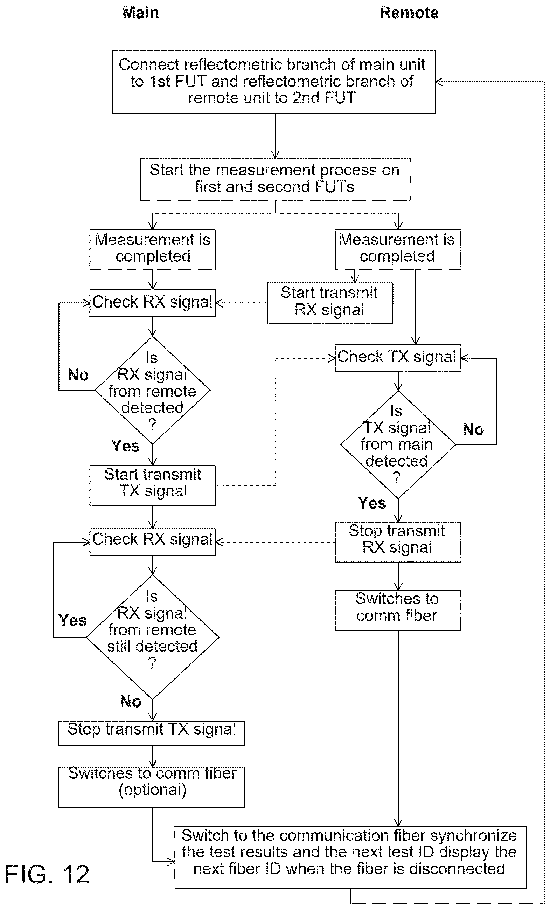

By way of example, FIG. 12 shows a flowchart of the synchronization method 300 as may be applied to any two fibers of an optical fiber network and encompassing both scenarios of FIGs. 10 and 11 relatively to the testing of which fiber is completed first. In some implementations, the synchronization method 300 may for example be applied to an optical fiber network such as the one shown in FIGs. 5A and 5B, having a first and a second set of N fibers under test (FUTs) 26, 28. At least one of the optical fibers within the first and second sets of FUTs serves as a communication fiber, for example the optical fiber numbered 4 in the first set of FUTs 26. The method 30 uses a main testing unit 32 and a remote testing unit 32' optically coupled to opposite extremities of the first and second sets of N FUTs 26, 28.

In this embodiment, the main testing unit 32 and remote testing unit 32' each includes:
- a reflectometric branch 40, 40' having at least one light source 42, 42' and a light detector 44, 44';
- an optical detector branch 50, 50' comprising an optical detector 52, 52';
- a primary switching stage 60, 60' having two unit-side ports 62a, 62b, 62a', 62b' optically coupled to the reflectometric branch 40, 40' and optical detector branch 50, 50', respectively, and two network-side ports 64a, 64b, 64a', 64b';
- a first secondary switching stage 66, 66' having a unit-side port 68. 68' optically coupled to one of the network-side ports 64a, 64a' of the primary switching stage and N network-side ports 70a, 70b... 70n, 70a', 70b'... 70n' respectively optically coupled to the N FUTs of the first set of N FUTs 26; and
- a second secondary switching stage 72, 72' having a unit-side port 74, 74' optically coupled to another one 64b, 64b' of the network-side ports of the primary switching stage 66, 66' and N network-side ports 76a, 76b... 76n, 76a', 76b'... 76n' respectively optically coupled to the N FUTs of the second set of N FUTs 28.

With additional reference to FIG. 12, the method first includes connecting the reflectometric branch 40 of the main testing unit 32 to one of the FUTs of the first set of FUTs 26, defining a first FUT 22, and one of the FUTs of the second set of FUTs 28, defining a second FUT 24. For example, in the illustrated examples of FIG. 5A, the optical fiber labelled 1 in the first set of N FUTs 26 defines the first FUT 22, and the optical fiber labelled 12 in the second set of N FUTs 28 defines the second FUT 24. OTDR measurements of the first FUT 22, using the reflectometric branch 40 of the main testing unit 32 and second FUT 24, using the reflectometric branch 40' of the remote testing unit 32', are then concurrently performed.

On the side of the main testing unit 32, upon completion of the OTDR measurement of the first FUT 22, the method next involves monitoring light from the second FUT 24 using the optical detector 52 of the main testing unit 32.

In parallel, on the side of the remote testing unit 32', upon completion of the OTDR measurement of the second FUT 24, the method next involves monitoring light from the first FUT 22 using the optical detector 52' of the remote testing unit 32', and begin sending a remote coordination signal RX in the second FUT 24, using the light source 42' of the reflectometric branch 40' of the remote testing unit 32'

Back on the side of the main unit 32, upon the monitoring 304 of light from the second FUT detecting the remote coordination signal RX, a main coordination signal TX is then sent in the first FUT 22 using the light source 42 of the reflectometric branch 40 of the main testing unit 32.

On the side of the remote unit 32' upon the monitoring of light from the first FUT 22 detecting the main coordination signal TX, the sending of the remote coordination signal is stopped, and the reflectometric branch 40' of the remote testing unit 32' is connected to the communication fiber 25, using the appropriate settings of the first and second switching stages. Data transmission 110' to the main testing unit 32 is initiated over the communication fiber 25 using the reflectometric branch 40' of the remote testing unit 32.

On the side of the main unit 32, upon the monitoring of light from the second FUT 24 using the optical detector 52 of the main testing unit 32 ceasing to detect the remote coordination signal RX, the sending of the main coordination signal TX is stopped. The reflectometric branch 40 of the main testing unit 32 is connected to the communication fiber 25 and data transmission 110 to the remote testing unit 32' is initiated over the communication fiber 25 using the reflectometric branch 40 of the main testing unit 32.

Once the test results are synchronized, the system is ready to initiate measurements in the opposite directions, or on a next pair of first and second FUTs.

Using this method, following the start of the measurement, the main and remote test units effectively coordinate to manage the measurement sequence. This may be particularly advantageous in multi-fiber link testing, where measurement times can vary depending on the characteristics of each fiber such as loss and attenuation. Coordination can ensure both accuracy and efficiency. For example, advanced reflectometric measurements that use multiple pulses for detailed characterization can result in significantly different durations from one fiber to another, making precise synchronization and communication between units optimal.

If one or more fibers require additional time to complete the measurement process, the method above ensures there is no risk of interference between the test units that could lead to incorrect results. It also prevents wasted time caused by synchronization delays and downtime.

Of course, numerous additional modifications could be made to the embodiments described above without departing from the scope of protection as defined in the appended claims.

## Claims

1. A testing unit for fast testing of an optical fiber network having first and second fibers under test (FUTs), comprising:
- a reflectometric branch, comprising:
i. at least one light source configured to generate optical test signals for propagation in the first or second FUTs; and
ii. a light detector configured to detect return light signals received from the first or second FUTs;
**characterized in that** it further comprises:
- a power meter branch, comprising a power meter configured to measure residual light signals transmitted through the first or second FUTs the reflectometric branch being and devoid of light sources; and
- a switching stage having two unit-side ports optically coupled to the reflectometric branch and power meter branch, respectively, and two network-side ports optically coupled to the first and second FUTs, respectively.

2. The testing unit according to claim 1, **characterized in that** it further comprises an acquisition controller configured to control the corresponding light source, light detector, power meter and switching stage, the acquisition controller optionally configured to:
- perform reflectometric or optical return loss measurements using the light source and the light detector; and
- perform transmission loss measurements using the power meter.

3. The testing unit according to claim 2, **characterized in that** it further comprises a processor configured to process data obtained from said reflectometric or optical return loss measurements and transmission loss measurements.

4. The testing unit according to any one of claims 1 to 3, **characterized in that** the at least one light source comprises two or more light sources having different spectral characteristics.

5. The testing unit according to any one of claims 1 to 4, **characterized in that** it is configured for use in instances wherein a loopback device connects the first and second FUTs at a distal end thereof opposite the testing unit, thereby defining a single FUT having first and second proximal ends optically coupled to the testing unit, the testing unit configured to:
- in a first step, send the optical test signals from the light source into the first proximal end of the single FUT, and measure the return light signals from the first proximal end of the single FUT using the light detector; and
- in a second step, send the optical test signals from the light source into the second proximal end of the single FUT, and measure the return light signals from the second proximal end of the single FUT using the light detector.

6. A testing system for fast testing of an optical fiber network having first and second fibers under test (FUTs), the testing system **characterized in that** it comprises a main testing unit and a remote testing unit each according to any one of claims 1 to 4, optically coupled to opposite extremities of the first and second FUTs.

7. The testing system according to claim 6 **characterized in that** it is configured to operate the light sources and the light detectors of the main unit and remote unit for transmitting data bidirectionally over at least one of the first and second FUTs.

8. The testing system according to claim 6 or 7, **characterized in that** it is configured to:
in a first step, concurrently:
- send the optical test signals from the light source of the main testing unit into the first FUT, and (i) measure the return light signals from the first FUT using the light detector of the main testing unit, and (ii) measure the residual light signals transmitted through the first FUT using the power meter of the remote testing unit; and
- send the optical test signals from the light source of the remote testing unit into the second FUT, and (i) measure the return light signals from the second FUT using the light detector of the remote testing unit, and (ii) measure the residual light signals transmitted through the second FUT using the power meter of the main testing unit; and
in a second step, concurrently:
- send the optical test signals from the light source of the main testing unit into the second FUT, and (i) measure the return light signals from the second FUT using the light detector of the main testing unit, and (ii) measure the residual light signals transmitted through the second FUT using the power meter of the remote testing unit; and
- send the optical test signals from the light source of the remote testing unit into the first FUT, and (i) measure the return light signals from the first FUT using the light detector of the remote testing unit, and (ii) measure the residual light signals transmitted through the first FUT using the power meter of the main testing unit.

9. The testing system according to claim 8, **characterized in that** it is further configured to perform a preliminary step of, concurrently:
- measure a length of the first FUT using the light source and the light detector of the main testing unit; and
- measure a length of the second FUT using the light source and the light detector of the remote testing unit.

10. The testing system according to claim 6 or 7, **characterized in that** it is configured for use in instances wherein the optical fiber network comprises a first and a second set of N FUTs, **characterized in that** the main testing unit and the remote testing unit each comprises:
- a first secondary switching stage having a unit-side port optically coupled to one of the network-side ports of the primary switching stage and N network-side ports respectively optically coupled to the N FUTs of the first set of N FUTs, each FUT of the first set of N FUTs thereby defining the first FUT when selected by the first secondary switching stage; and
- a second secondary switching stage having a unit-side port optically coupled to another one of the network-side ports of the primary switching stage and N network-side ports respectively optically coupled to the N FUTs of the second set of N FUTs, each FUT of the second set of N FUT thereby defining the second FUT when selected by the second secondary switching stage.

11. The testing system according to claim 10, **characterized in that** it is configured to:
in a first series of steps, concurrently:
- sequentially send the optical test signals from the light source of the main testing unit into each one of the FUTs of the first set of N FUTs, and (i) measure the return light signals from each corresponding FUT of the first set of N FUTs using the light detector of the main testing unit, and (ii) measure the residual light signals transmitted through each corresponding FUT of the first set of N FUTs using the power meter of the remote testing unit; and
- sequentially send the optical test signals from the light source of the remote testing unit into each one of the FUTs of the second set of N FUTs, and (i) measure the return light signals from each corresponding FUT of the second set of N FUTs using the light detector of the remote testing unit, and (ii) measure the residual light signals transmitted through each corresponding FUT of the second set of N FUTs using the power meter of the main testing unit; and
in a second series of steps, concurrently:
- send the optical test signals from the light source of the main testing unit into each one of the FUTs of the second set of N FUTs, and (i) measure the return light signals from each corresponding FUT of the second set of N FUTs using the light detector of the main testing unit, and (ii) measure the residual light signals transmitted through each corresponding FUT of the second set of N FUTs using the power meter of the remote testing unit; and
- send the optical test signals from the light source of the remote testing unit into each one of the FUTs of the first set of N FUTs, and (i) measure the return light signals from each corresponding FUT of the first set of N FUTs using the detector of the remote testing unit, and (ii) measure the residual light signals transmitted through each corresponding FUT of the first set of N FUTs using the power meter of the main testing unit.

12. A fast testing method for an optical fiber network having a first and a second set of N fibers under test (FUTs) using a testing system according to claim 6 or 7 optically coupled to opposite extremities of the first and second sets of N FUTs, the method **characterized in that** it comprises:
in a first series of steps, concurrently:
- sequentially send the optical test signals from the light source of the main testing unit into each one of the FUTs of the first set of N FUTs, and (i) measure the return light signals from each corresponding FUT of the first set of N FUTs using the light detector of the main testing unit, and (ii) measure the residual light signals transmitted through each corresponding FUT of the first set of N FUTs using the power meter of the remote testing unit; and
- sequentially send the optical test signals from the light source of the remote testing unit into each one of the FUTs of the second set of N FUTs, and (i) measure the return light signals from each corresponding FUT of the second set of N FUTs using the light detector of the remote testing unit, and (ii) measure the residual light signals transmitted through each corresponding FUT of the second set of N FUTs using the power meter of the main testing unit; and
in a second series of steps, concurrently:
- send the optical test signals from the light source of the main testing unit into each one of the FUTs of the second set of N FUTs, and (i) measure the return light signals from each corresponding FUT of the second set of N FUTs using the light detector of the main testing unit, and (ii) measure the residual light signals transmitted through each corresponding FUT of the second set of N FUTs using the power meter of the remote testing unit; and
- send the optical test signals from the light source of the remote testing unit into each one of the FUTs of the first set of N FUTs, and (i) measure the return light signals from each corresponding FUT of the first set of N FUTs using the detector of the remote testing unit, and (ii) measure the residual light signals transmitted through each corresponding FUT of the first set of N FUTs using the power meter of the main testing unit.

13. The fast testing method according to claim 12, **characterized in that** it further comprises operating the light sources and the light detectors of the main unit and remote unit for transmitting data bidirectionally over at least one of the FUTs of the first and second sets of N FUTs.

14. The fast testing method according to claim 12 or 13, **characterized in that** it comprises:
- performing Insertion Loss (IL) measurements using the residual light signals transmitted through the FUTs of the first and second sets of N FUTs measured by the main testing unit and remote testing unit; and/or
- performing Optical Return Loss (ORL) measurements using the return light signals from the FUTs of the first and second sets of N FUTs measured by the main testing unit and remote testing unit; and/or
- performing Optical Time Domain Reflectometry (OTDR) measurements using the return light signals from the FUTs of the first and second sets of N FUTs measured by the main testing unit and remote testing unit.

15. The fast testing method according to any one of claims 12 to 14, **characterized in that** N=1, the first and second sets of N FUTs thereby defining a first FUT and a second FUT.
